# NEW EUROPEAN PATENT SPECIFICATION

(11) **EP 1 765 612 B2**
(45) Date of publication and mention of the opposition decision: **08.07.2015**
(45) Mention of the grant of the patent: 13.05.2009
(21) Application number: 05749329.8
(22) Date of filing: 17.05.2005
(51) Int. Cl.: B60D 1/54, B60D 1/06

(54) **ROTATABLE TOW HITCH FOR A VEHICLE**
DREHBARE ANHÄNGEKUPPLUNG FÜR EIN FAHRZEUG
CROCHET DE REMORQUAGE TOURNANT POUR VEHICULE

(30) Priority: 14.05.2004 NL 1026198
(43) Date of publication of application: 28.03.2007
(73) Proprietor: Brink Towing Systems B.V., 7951 CX Staphorst (NL)
(72) Inventor: MARGADANT, Arnoud, Philip, Daan, NL-7948 LR Nijeveen (NL); EISING, Frederik, Jacob, NL-9433 PM Zwiggelte (NL)
(74) Representative: Hammond, Andrew David
(86) International application number: PCT/NL2005/000373
(87) International publication number: WO 2005/110781

(56) References cited:
- EP-A- 1 084 871
- WO-A-03/072375
- DE-A1- 10 243 433

## Description

### BACKGROUND OF THE INVENTION

The invention relates to a tow hitch assembly of which the part provided with the tow hitch ball is rotatable between an operative position extended from a vehicle and a stowed-away inoperative position. Document WO 03/072375 A describes a tow hitch assembly according to the preamble of claim 1.

Many embodiments of such tow hitch assemblies are known.

From British patent specification 1.504.643, US patent specification 2.889.155 and German utility model 91.09699.5 an embodiment is known in which the rotatable part can be rotated about a horizontal axis of rotation that is oriented transverse to the vertical centre longitudinal plane of the vehicle.

From US patent specification 2.544.185 and European patent application 1.145.876 an embodiment is known in which the rotatable part can be rotated about a horizontal axis of rotation extending in the longitudinal direction of the vehicle, and moreover can be shifted in said direction.

From French patent application 2.740.080, US patent specification 4.109.930 ad German utility model 91.09699.5 an embodiment is known in which the rotatable part can be rotated about a vertical axis of rotation.

From US patent specification 3.640.550 an embodiment is known in which the rotatable tow hitch member is rotatable about a horizontal axis of rotation that is oriented inclined to the vertical centre longitudinal plane of the vehicle.

From German patent application 198 59 961 an embodiment is known in which the rotatable tow hitch member is rotatable about an axis of rotation that is oriented inclined to a vertical transverse plane of the vehicle.

From US patent specification 4.078.827 an embodiment is known in which the rotatable part can be rotated about an axis of rotation that is oriented inclined with respect to a vertical centre longitudinal plane of the vehicle and slightly inclined with respect to a vertical transverse plane of the vehicle.

From German patent application 198 26 618 an embodiment is known in which a straight end member of the rotatable part is provided with a cam track in which a fixed cam engages, so that the rotatable part can be slid up and down and can also be rotated about a vertical axis of rotation. A comparable motion, however this time consecutively, that means vertically linearly downwards - rotation in a horizontal plane - and vertically linearly upwards again, is known from German patent application 100 04 523.

From European patent application 1.090.782 an embodiment is known wherein the rotatable part, during transfer from the operative position to the inoperative position, can consecutively be pulled downwards, then can be rotated upwards over 90 degrees about a horizontal axis of rotation situated in the centre longitudinal plane of the vehicle and finally can be rotated about a vertical axis of rotation over again 90 degrees.

The known tow hitch assemblies with combined translation-rotation are complex and therefore failure prone.

The known tow hitch assemblies with combined translation-rotation moreover are not easy to adapt to specific conditions of a vehicle model.

It is an object of the invention to provide an embodiment of a tow hitch assembly having a rotatable tow hitch member that at least improves on one of the said disadvantages.

It is a further object of the invention to provide an alternative embodiment of a tow hitch assembly having a rotatable tow hitch member.

It is a further object of the invention to provide a tow hitch assembly having a rotatable tow hitch, with which adjustment to a desired motion is easy.

It is a further object of the invention to provide a tow hitch assembly having a rotatable tow hitch which is simple as regards build-up and which also in the long run is able to operate reliably.

### SUMMARY OF THE INVENTION

From one aspect the invention provides a tow hitch assembly for a vehicle according to claim 1.

In this way a compact and simple arrangement can be realised for rotation of the tow hitch member, which is bearing mounted and driven at its inner end. The bearing housing with first cam track can easily be adjusted to the vehicle type in question, so that use can be made of a universal tow hitch member having a proximal end provided with a drive cam.

In one embodiment the rotation can take place about at least two rotation axes that are perpendicular to each other.

A first rotation axis can be vertical or at a small angle to the vertical. The first rotation axis can be at a small angle to the vertical, considered in a vertical plane of projection transverse to the driving direction of the vehicle. The first rotation axis can be situated in a vertical plane perpendicular to a vertical centre longitudinal plane of the vehicle. The first hinge axis may slope upwards towards the side to which the tow hitch member is moved in the movement to the inoperative position. The tow hitch ball will in case of rotation about said axis also move slightly downwards.

The tow hitch member can hinge about the second and third rotation axis for movement between at least one high position and a low position of the tow hitch ball. In this way the movement towards/from the operative position can take place about the second axis and the movement from/towards the inoperative position about the third axis.

In one embodiment the second and the third rotation axis are formed by the same parts, which however are then rotated about the first axis.

The tow hitch member can be hingable about a second rotation or hinge axis for movement between at least one high position and a low position of the tow hitch ball.

The tow hitch member may both in the inoperative position and the operative position take a high position with the tow hitch ball, in which position the tow hitch ball is situated higher than the tow hitch neck, which connects thereto.

The holder member comprises a bearing housing forming a first guide track or cam track for guiding the drive cam in its movement. The first cam track can be substantially U-shaped, wherein the legs define the position of the drive cam in both positions.

The legs of the U-shape may in top view mutually include an angle of approximately 90 degrees.

The drive means comprise a drive sleeve provided with an accommodation space for driving engagement of the drive cam. Such a drive sleeve is a part that can easily be adjusted to the desired movement and can simply be engaged for drive. The accommodation space can be formed by a second guide track or cam track, for subjecting the drive cam to a movement, which track can be V-shaped.

In a first further development the drive sleeve is situated between the proximal end and the bearing housing. The accommodation space may then form a passage for the drive cam.

In a second further development the drive sleeve is situated around the bearing housing. The first guide track or cam track can then form a passage for the drive cam.

In a further embodiment the proximal end portion is provided with an added orienting member and the bearing housing is provided with a guide track for the orienting member. The orienting member may form a protrusion such as a pin having an orienting plate bearing mounted thereon so as to be freely rotatable. Alternatively the orienting member may comprise a ring that is arranged on the proximal end portion so as to be rotatable about a pin. The orienting plate or the ring can be supported on the guide track for movement therealong.

In one embodiment the axis of the pin coincides with said second and third rotation axes, in two positions rotated with respect to the first rotation axis.

In a simple embodiment the guide track is arranged at the inside of the bearing housing.

The guide track may extend concentrically about the first rotation axis.

The tow hitch assembly may comprise an electromotor for driving the drive sleeve. One motor will suffice for the movement of the tow hitch between the inoperative position and the operative position.

The drive sleeve can be rotatable about the first hinge axis.

In one embodiment the first cam track has a substantially vertically oriented first end portion which defines the position of the first cam in the operative position of the tow hitch member. In one embodiment the first cam track has a substantially vertically oriented second end portion which defines the position of the first cam in the inoperative position of the tow hitch member. When present, the second cam track may then be substantially V-shaped.

In one embodiment the proximal end portion is spherical. By having the rotation take place about a ball hinge, all movements are concentrated on one single point, as a result of which the construction can be designed simple and as little failure-prone as possible.

The orienting of the tow hitch member can be carried out with the first cam itself. In one embodiment it is provided that the spherical end portion and the bearing housing are provided with a second cam and third cam track that are cooperating with each other for orienting the spherical end portion in the bearing housing, as a result of which the stability can be enhanced. It is preferred then that the second cam is provided on the spherical end portion and the third cam track is provided on the bearing housing, so that the latter can remain simple as regards construction.

From a further aspect the invention provides a tow hitch assembly for a vehicle, having a tow hitch member that comprises a spherical proximal end portion that is provided with a protrusion, wherein the spherical end portion is accommodated in a relatively stationary sphere bearing housing, provided with a first cam track for guiding the protrusion.

Preferably a drive sleeve is present which is provided with a second cam track for the protrusion and drivingly engages it for rotating the tow hitch member between an extended operative position and a stowed-away inoperative position.

Preferably the drive sleeve is positioned for rotation about a substantially vertical axis.

From a further aspect the invention provides a tow hitch assembly for a vehicle, having a tow hitch member comprising a proximal end portion provided with a protrusion, and accommodated in a relatively stationary bearing housing that is provided with a first cam track for guiding the protrusion for rotation of the proximal end portion and thus the tow hitch member in at least two directions that are perpendicular to each other.

From a further aspect the invention provides a tow hitch assembly for a vehicle, having a tow hitch member which at a distal end portion is provided with a neck part having a hitch ball at its end and which with a proximal end portion is connected to a holder member to be attached to the vehicle, wherein the holder member and the proximal end portion form a hinge connection with each other for rotation of the tow hitch member about at least two axes including an angle with each other, in a movement between an extended operative position and a stowed-away inoperative position, wherein the proximal end portion is provided with a drive cam or control cam and a first and a second guide track for them, wherein the drive cam extends in both guide tracks and both guide tracks have a mutually different course and are movable with respect to each other for movement of the drive cam. In this way a simple embodiment for the drive of the cam at the tow hitch can be realised. The first guide track can be fixedly positioned and the second guide track can be movably positioned.

The first and the second guide tracks can be movable with respect to each other by rotation about one single rotation axis. The drive cam can extend radially or with a radial directional component with respect to the rotation axis.

The first and second guide tracks can be arranged in a first surrounding body and a second surrounding body, respectively, wherein the first body surrounds the second body and the proximal end is accommodated in the second body. The first body can be driven and the second body can be stationary. Alternatively the second body can be driven and the first body can be stationary. The surrounding bodies can each be hollow.

The first guide track can be substantially V-shaped and the second guide track can be substantially U-shaped or the second guide track can be substantially V-shaped and the first guide track can be substantially U-shaped.

From a further aspect the invention provides a tow hitch assembly for a vehicle, having a tow hitch member which at a distal end portion is provided with a neck part having a hitch ball at its end and which with a proximal end portion is connected to a holder member to be attached to the vehicle, wherein the holder member and the proximal end portion form a hinge connection with each other for rotation of the tow hitch member about at least two rotation axes including an angle with each other, in a movement between an extended operative position and a stowed-away inoperative position, wherein the proximal end portion is provided with a drive cam or control cam and at least one driven guide track for it for driving the drive cam.

The rotation axes may form an intersection in the proximal end portion, which intersection forms a multiple point of rotation, and wherein the drive cam is situated at a side of the intersection facing away from the tow hitch neck.

From a further aspect the invention provides a tow hitch assembly for a vehicle, having a tow hitch member which at a distal end portion is provided with a neck part having a hitch ball at its end and which with a proximal end portion is connected to a holder member to be attached to the vehicle, wherein the holder member and the proximal end portion form a hinge connection with each other for rotation of the tow hitch member, provided with one or more of the measures described above.

In all the aforementioned embodiments the first rotation axis may be at a small angle to the vertical, considered in a vertical plane of projection transverse to the driving direction of the vehicle, wherein the tow hitch member is rotatable about a multiple or combined point of rotation, wherein the tow hitch neck in an area including and connecting to the tow hitch ball, is situated in a vertical centre longitudinal plane of the vehicle, wherein the point of rotation is also situated in said centre longitudinal plane.

From a further aspect the invention provides a tow hitch assembly for a vehicle, having a tow hitch member which at a distal end portion is provided with a neck part having a hitch ball at its end and which with a proximal end portion is connected to a holder member to be attached to the vehicle, wherein the holder member and the proximal end portion form a hinge connection with each other for rotation of the tow hitch member about a point of rotation about more than one rotation axis, wherein a first rotation axis is at a small angle to the vertical, considered in a vertical plane of projection transverse to the driving direction of the vehicle, wherein the tow hitch neck in an area including and connecting to the tow hitch ball, is situated in a vertical centre longitudinal plane of the vehicle, wherein the point of rotation is also situated in said centre longitudinal plane.

The proximal end portion, considered in projection on a vertical transverse plane of the vehicle, can with its axis coincide with the projection of the first rotation axis.

### SHORT DESCRIPTION OF THE DRAWINGS

The invention will be elucidated on the basis of the exemplary embodiments shown in the attached drawings, in which:
Figure 1 shows a tow hitch member of an exemplary embodiment of a tow hitch assembly according to the invention;
Figure 1A shows a detail of a spherical proximal end of the tow hitch member of figure 1;
Figure 2 shows in exploded condition an upper member and a lower member of a bearing housing in the exemplary embodiment of the tow hitch assembly according to the invention;
Figure 3 shows a view of a drive casing or drive sleeve in the said tow hitch assembly;
Figure 4 shows a view in perspective of the parts of the figures 2 and 3 in assembled condition;
Figures 5A-D show a schematic view of consecutive conditions of the tow hitch member according to the preceding figures, between an operative position and an (almost) inoperative position;
Figure 6 shows the tow hitch assembly of the preceding figures, in the inoperative position;
Figures 7A-D show an isometric view, a side view, a top view, and a front view, respectively, of an alternative embodiment of a tow hitch assembly according to the invention;
Figures 8A-D show an isometric view, a side view, a rear view and a cross-section, respectively, of a tow hitch member of the tow hitch assembly according to the figures 7A-D;
Figures 9A and 9b show cross sections according to arrows IXA and IXB in figure 7C;
Figures 10A and 10B show an isometric view and a side view, respectively, of a drive part for the tow hitch member of the tow hitch assembly according to the figures 7A-D;
Figures 11A and 11B show an isometric view and a cross-section, respectively, of a bearing part for the tow hitch member in the tow hitch assembly according to the figures 7A-D;
Figures 12A-G show an isometric view, a top view, four cross-sections and a side view, respectively, of a drive casing for the tow hitch assembly according to the figures 7A-D;
Figures 13A-G show an isometric view, a side view, a horizontal cross-section, a top view, a cross-section, a longitudinal section and a bottom view, respectively, of a lower member of a bearing housing for the tow hitch assembly of the figures 7A-D;
Figures 14A-H show an isometric view, a bottom view, two cross-sections, a top view and three cross-sections of an upper member for cooperation with the lower member of a bearing housing for the tow hitch assembly according to the figures 7A-D; and
Figures 15A-K show consecutive stages in a movement of the tow hitch member of the tow hitch assembly according to figures 7A-D from an operative position to an inoperative position.

### DETAILED DESCRIPTION OF THE DRAWINGS

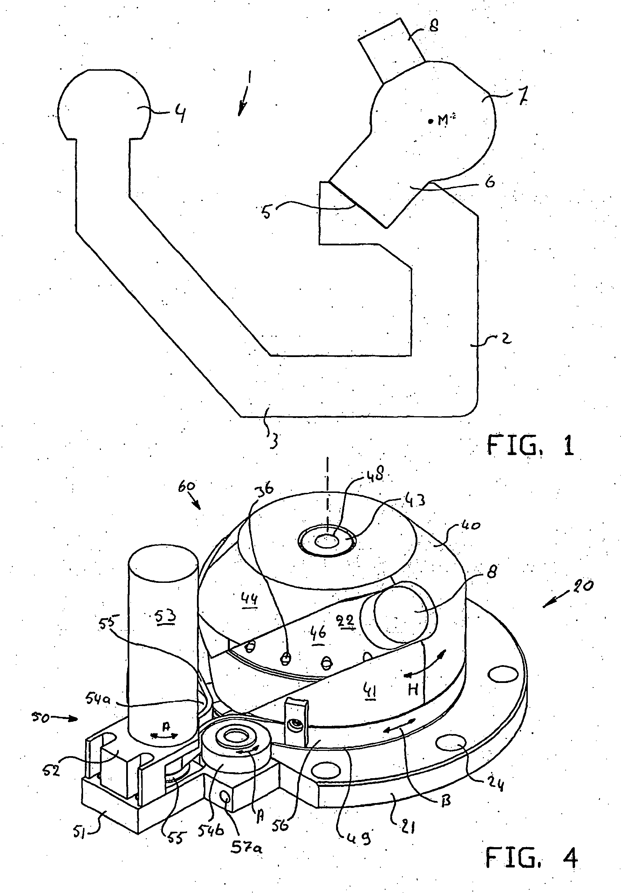

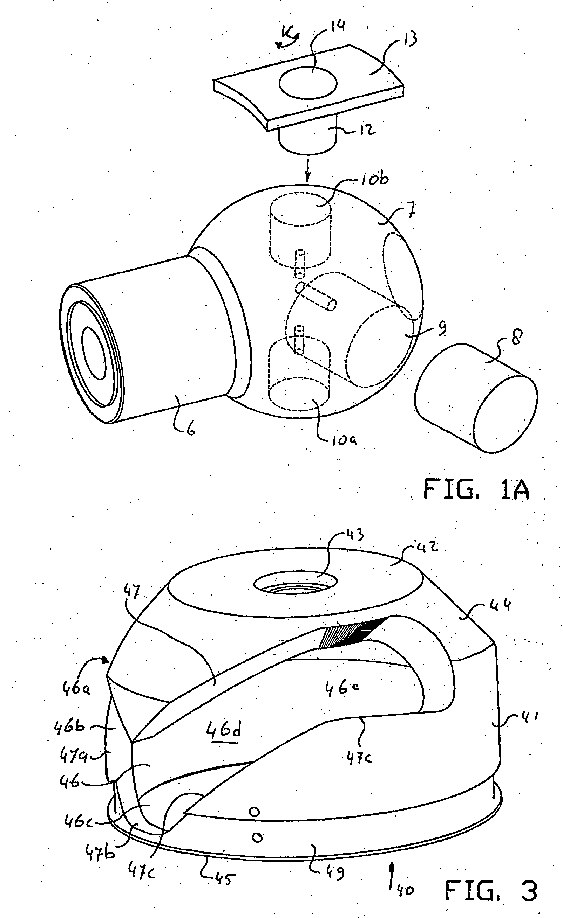

Tow hitch member 1 in figure 1 is in this example substantially U-shaped having a proximal portion 2, a tow hitch ball 4 and a neck 3 extending in between them. The proximal portion 2 is provided with a recess 5 in its upper end, in which neck part/attachment part 6 of a bearing sphere 7 is attached, in a way that is not further shown. When assembling the desired sphere 7/neck 6 can be selected for the tow hitch member 1 in question, adjusted to the desires and/or constructional conditions.

As indicated in figure 1A the spherical bearing member 7 is provided with recesses 9, 10a and 10b. Recess 9 is intended for partial accommodation of a cylindrical cam 8, and one or both recesses 10a, 10b are intended for accommodation of a pin 12. A guide plate 13 (K) is bearing mounted on the pin 12 by means of a fitting hole 14. The shape of the guide plate 13 is matched to the spherical surface of the sphere 7. The cam 8 projects further from the surface of the sphere 7 than the pin 12 and the guide plate 13 do, as will be further elucidated below.

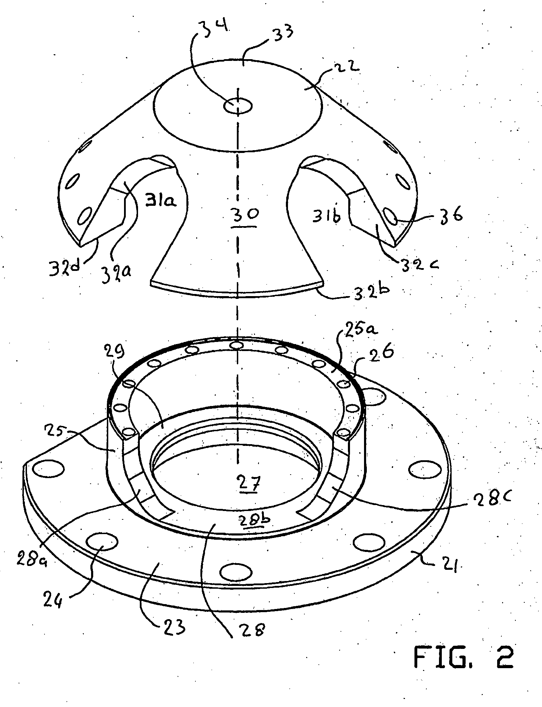

In figure 2 shows the bearing housing 20 for bearing the spherical bearing member 7. A lower member 21 and an upper member 22 can be distinguished. The lower member 21 comprises a flange 23 and a collar 25 extending therefrom having upper edge 25a, wherein the flange 23 is provided with a number of attachment holes 24. Likewise the collar 25 is provided with a number of attachment holes 26. Within the collar 25 the flange 23 forms annular guide edge 29 for the guide plate 13. Within it there is a through-opening 27 for passage of the attachment member 6 that extends through it with play. The sphere 7 supports rotatably on the side of the edge 29. The collar 25 is provided with a recess 28, limited by upwardly inclining edges 28a, 28c and a horizontal edge 28b.

The upper member 22 is substantially truncated conical, having an upper wall 33 provided with a hole 34 and a conical casing 30. In the conical casing 30 two recesses 31a, 31 b are provided that are each formed symmetrically with respect to radial planes and that are parallel to each other and bounded by U-shaped edges 32a, 32c. In between them the casing 30 is bounded at the bottom edge by an edge 32b. The upper member 22 is furthermore provided with attachment holes 36.

When the upper member 22 is placed with the bottom edges 32b,d on the upper edge 25a of the lower member 21 and is attached to the lower member 21 by means of bolts extending through holes 24 and 26, the edges 32a, 32c smoothly merge into edges 28a, 28c, respectively. Either a U-shaped or a V-shaped track has then been formed in which the cam 8 can be guided.

Figure 3 shows the drive casing 40 in which can be distinguished a circle cylindrical casing member 41 a truncated conical casing member 44 and an upper wall 42, in which is a hole 43, for accommodation of a bearing pin 48 (figure 4) which can also extend through hole 34 of the upper member 22 of the bearing housing 20.

Near the bottom edge the casing member 41 is provided with a circumferential groove 49 for a drive belt 56 to be discussed in figure 4. In the conical casing member 44 and the cylindrical casing member 41 a substantially V-shaped duct or groove 47 with turned ends has been left open, which may be symmetrical with respect to a radial or axial plane of the drive casing 40, in which can be distinguished turned ends 46a, 46e, downwardly inclining sections 46b, 46d, and bottom section 46c. The groove 46 is bounded by edges 47, 47a-e for guiding the cam 8. The drive casing 40 is provided with a bottom edge 45.

When assembling this exemplary embodiment of a tow hitch assembly according to the invention, first the spherical bearing member 7 is placed in the lower member 21 of the bearing housing 20, and subsequently the upper member 22 is attached thereto. The sphere 7 fits rotatably in the thus formed bearing housing 20 which almost fully envelops the sphere 7. Subsequently the drive casing 40 is placed over it, wherein the bottom edge 45 supports on the flange 23. The pin 48 is inserted through the holes 34 and 43.

Prior to mounting in a vehicle a drive (figure 4) is added. The drive 50 shown in figure 4 comprises a support plate 51, which by means of bolts extending through holes 57a can be attached to the lower member 21 of the bearing housing 20. Mounting housing 52, on which an electromotor 53 has been placed, is placed on the support plate 51. At its drive pin, the electromotor 53 is provided with a drive wheel 55. On the plate two guide rollers 54a, 54b are furthermore arranged. In the said groove 49 of the drive casing 40 an endless drive belt or drive band 56 is placed, which runs about the wheels 54a, 54b and for drive is engaged by drive wheel 55. When the drive wheel 55 is rotated in the direction A, the drive casing 40 will also be rotated in the direction B. Said rotation (H) takes place about axis S, which axis S coincides with said holes 34, 40 and 27.

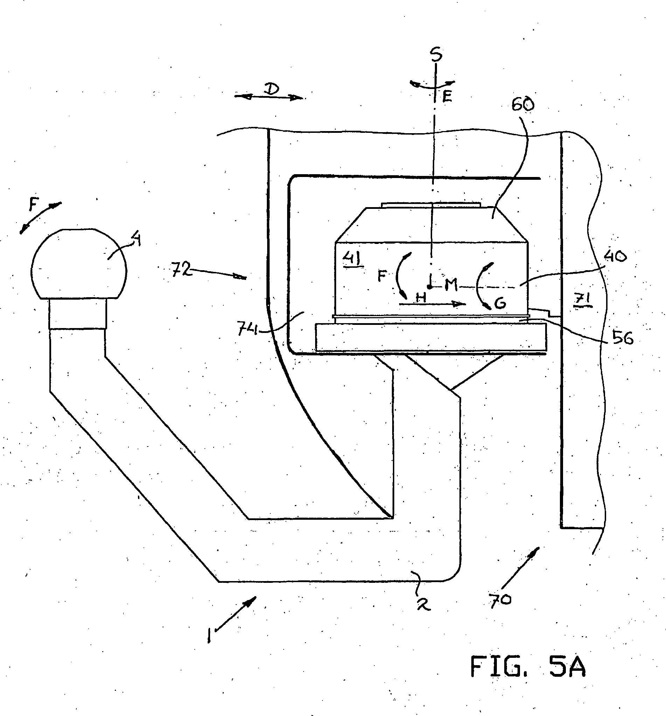

The tow hitch assembly according to this example is suitable to be placed with the assembled end 50 in a vehicle 70, see figures 5A-D, particularly in a cavity 74 provided in the rear bumper 72 of the vehicle 70, of which the chassis cross bar 71 is shown. The bearing housing 20, particularly the flange 23 may by means of the holes 24 be fixedly attached to the bumper 72 and via this one to the chassis. Operation lines and feed lines for the motor 53 are not shown.

Figure 5A shows the longitudinal direction D of the vehicle 70. It is furthermore shown that the axis S is vertically oriented. It is furthermore shown that the centre point M of the bearing sphere 7 is confined in the bearing hosing 20 in a snugly fitting and rotatable manner. Guide plate 13 may then come into engagement with the edge 29, and thus be moved over it by its own free rotatability about pin 12. Cam 8 extends through the groove/duct formed in the bearing housing 20 by recesses 31 a, 31 b, 28, as well as through the groove/duct 46 in the drive casing.

Figure 5A shows that the sphere 7 can in principle be rotated about three axes that are perpendicular to each other, namely rotation in the directions E, F and G.

Figure 5A shows the operative position. The cam 8 is then in the turned end section 46e of the groove 46. Suitable means can provide a locking of the cam 8 in that position.

For transferring the tow hitch member 1 to the inoperative position the electromotor 53 is actuated. As a result the drive belt 56 is driven, due to which the casing 40 rotates about axis S, in the direction H. The cam 8 will first of all -relatively- leave end section 46e. Subsequently the cam 8 comes in the downwardly inclined groove section 46d, and is thereby urged downwardly inclined. Said movement is made possible by the vertically oriented recess 31 b in the upper member 22 of the bearing housing 20. The tow hitch member 1 will here rotate about centre point M in the direction F in the centre longitudinal plane of the vehicle 70.

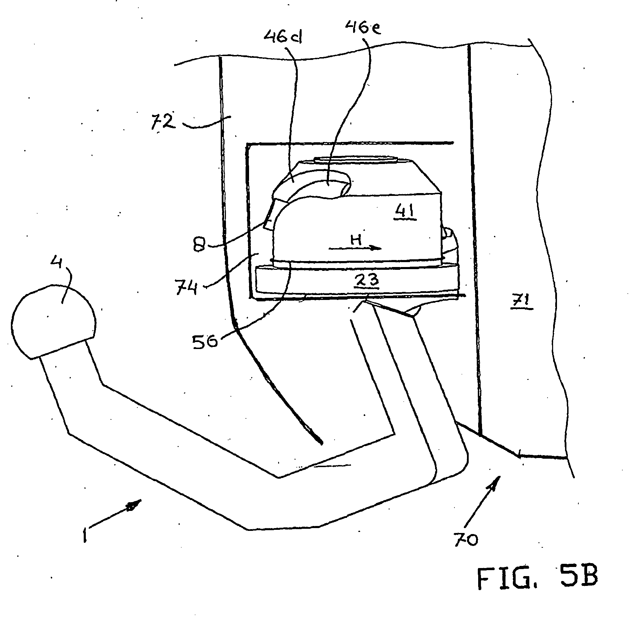

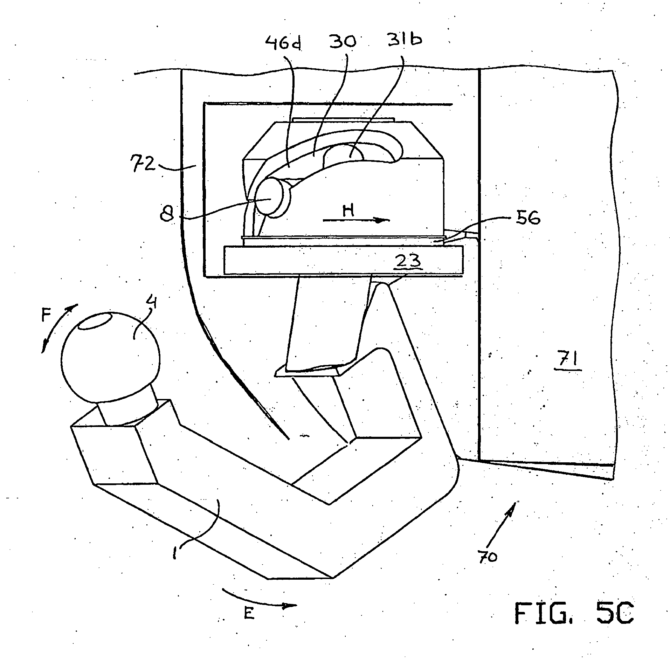

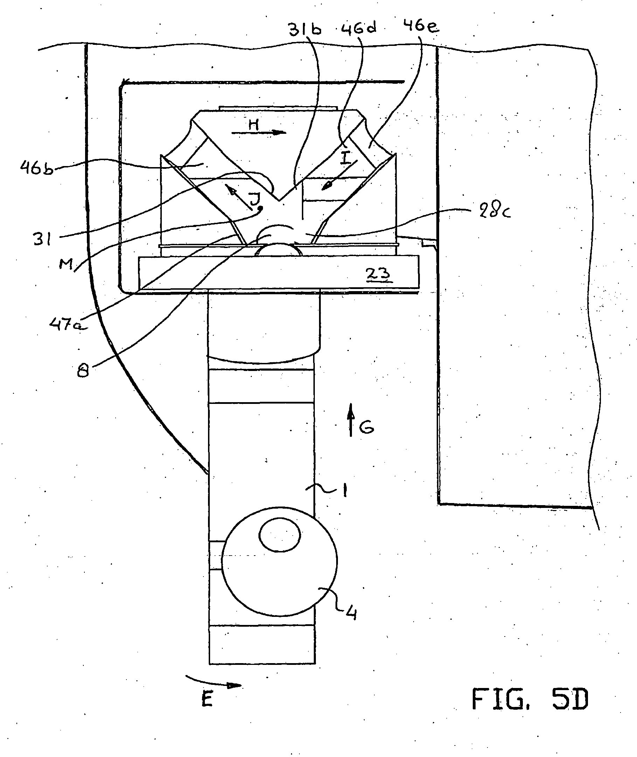

In case of further rotation in the direction H of the drive casing 40 (figures 5B, 5C) the cam 8 is moved further downwards in section 46d, and along the declining edge portion 28a of the collar 25 of the lower member 21 of the bearing housing 20. With a combined rotation in the directions F and G a rotation in the direction E is carried out. The cam 8 runs over the edge 28a until in the recess 28 (figures 5C,D). This continues until the cam 8 is in the groove section 46c, supported by edge portion 28b of bearing housing 20.

Then the situation shown in figure 5D is reached, in which the ball 4 has reached the lowermost position, and has as it were been turned under the bumper 7. The cam 8 has then also abutted the edge 28c on the collar 25 of the lower member 21. In case of further rotation of the drive casing in the direction H the cam 8 is first urged upwards by the groove section 46b under slight further rotation with a combined rotation (due to the inclined edge 28c) and then, after the cam 8 contacts the bounding edge 32c, is urged straight upwards in the direction J, in the -fixed- bearing housing 20, in order to be fully accommodated in recess 31 a. In case of further rotation of the drive casing 40 the cam 8 then finally ends in the turned end section 46a, in order to be locked there.

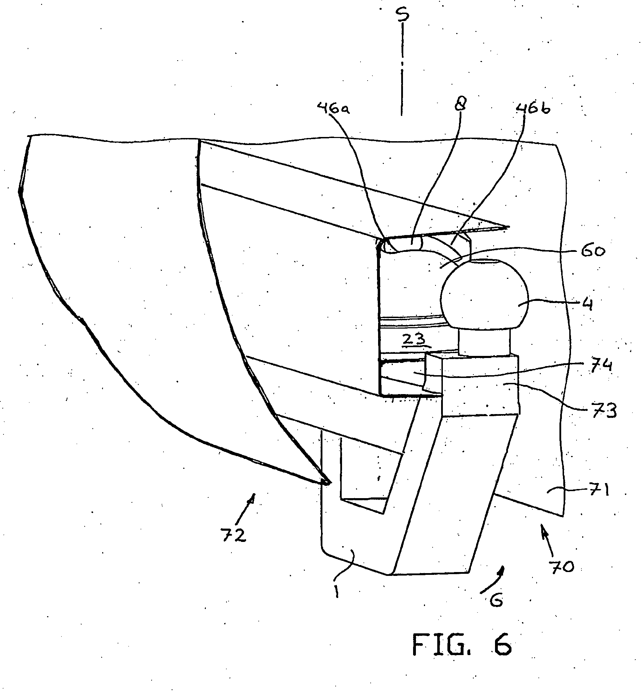

The situation shown in figure 6 is then achieved, in which the ball 4 has been moved through an opening 73 disposed in the rear bumper 72 for that purpose.

It will be understood that due to design of the groove 46 and the recesses 28, 31 a, 31 b forming the guide track for the cam 8 in the bearing housing 20, any desired rotation of the tow hitch member 1 can be realised. The shape of the tow hitch member, the location and design of the rear bumper and the other parts of the vehicle can be adjusted to.

Locking of the tow hitch in the operative position and an inoperative position can also take place by using the electromotor.

When it is desired to transfer the tow hitch from the inoperative position to the operative position again, the drive motor 50 is actuated in reverse direction. The drive casing 40 will be rotated in the direction opposite the direction H about the axis S. Movement of the tow hitch member 1 then takes place in reverse direction.

The tow hitch member according to the invention is easy to build up. The parts can easily be replaced or adjusted to the desired movements. The bearing with the proximal end, in this case spherically accommodated in the bearing housing 20, is simple and reliable. The spherical end portion 7 moreover here offers a large freedom of rotation that can be utilised for adjustment to the desired movement. The location of the cam 8 and the pin(s) 12 and the shape of the groove 46 can easily be adjusted to each other. The cam 8 and the pin 12 can be situated at almost any desired location of a sphere plane, depending on the design. The sphere 7 offers a reliable bearing having a high strength.

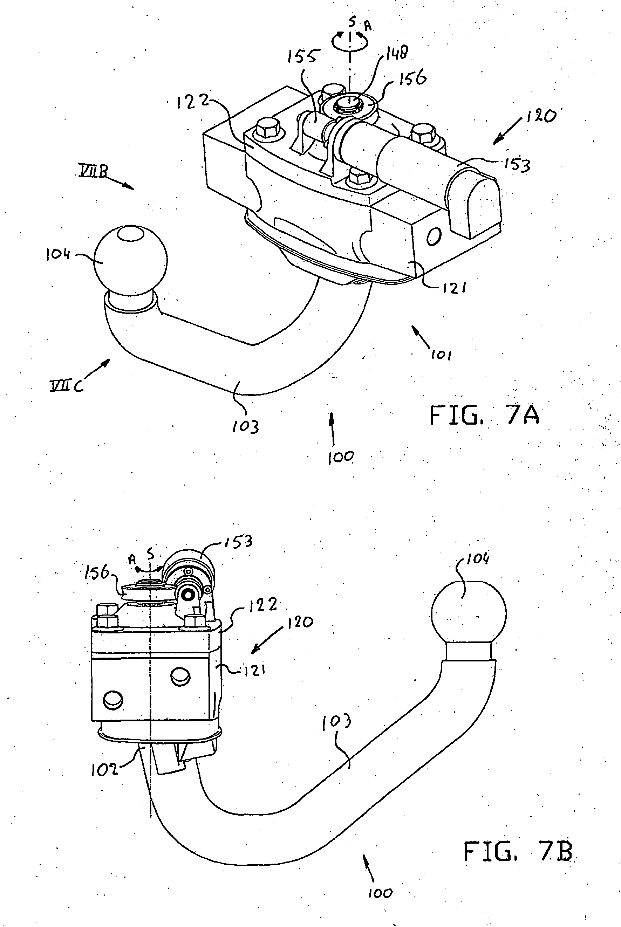

The tow hitch assembly 100 according to figures 7A-D comprises a tow hitch member 101 which in this example is substantially U-shaped, having a proximal portion 102, a tow hitch ball 104 an a neck 103 extending therebetween. The proximal portion 102 is rotatably accommodated in a bearing housing 120, having a lower member 121 and an upper member 122, which by means of bolts are attached onto each other. On top of the bearing housing an electromotor 153 is disposed, with which a worm roller 155 is rotated. From the upper member 122 of the bearing housing 120 a shaft 148 extends, on which in a rotation-fixed manner a worm wheel 156 is attached, which is in driving engagement with the worm roller 155, for rotation in the directions A about axis S.

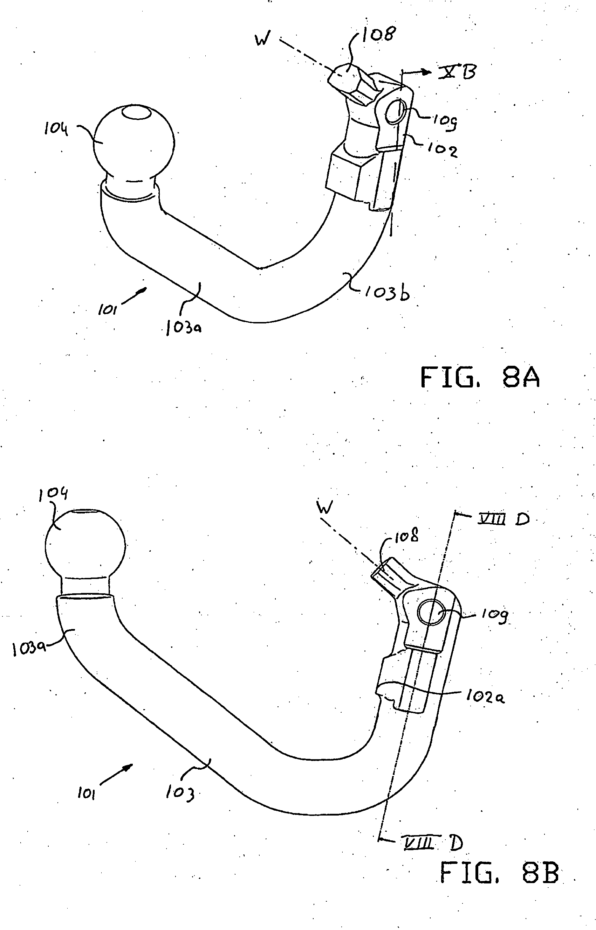

The tow hitch member 101 is further shown in the figures 8A-D. The proximal portion 102 is provided with a cam 102a disposed at the inner side of the U-form, and with a drive cam or control cam 108 at the end. In its proximity the proximal portion 102 is provided with a transverse through-bore hole 109, that is perpendicular to the axis W of the drive cam 108. In the cross-section of the figure 8B said line W coincides with the line S1, the axis of the proximal portion 102.

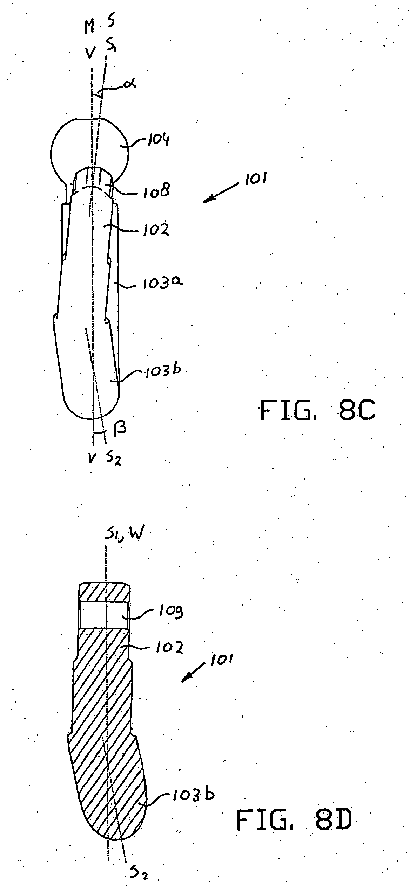

As can be seen in the figures 8C and 8D the tow hitch member 101 is shaped in a particular way, wherein the portions 102, 103b and 103a with ball 104 with their axes are not situated in one plane. For instance the portion 103b is at an obtuse angle to the portion 102 and the portion 103a is at an obtuse angle to the portion 103b, yet also at an angle to portion 102. This is made visible in the figures 8C and 8D with axis S1 of portion 102, which is at an angle α to the axis V of portion 103a, whereas the line V is at an angle β to the line S2, the axis of portion 103b.

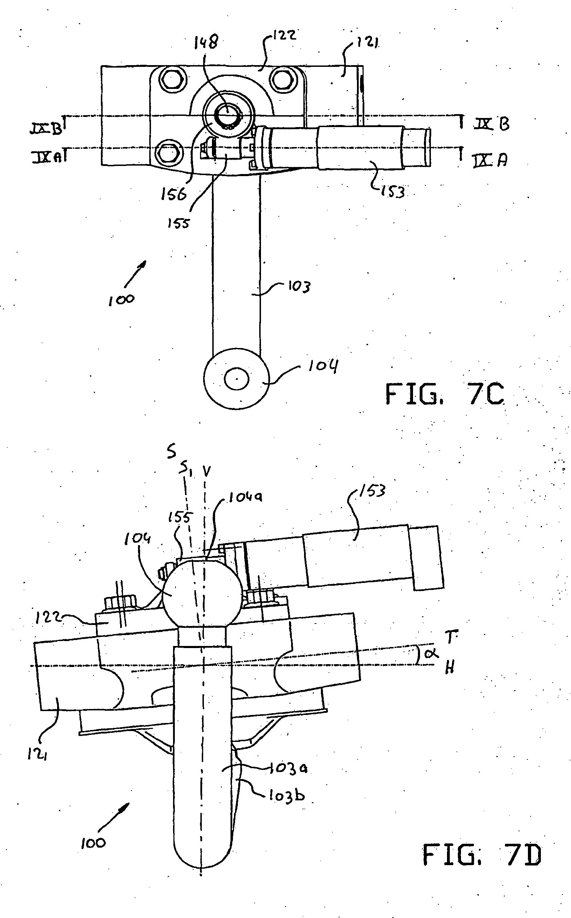

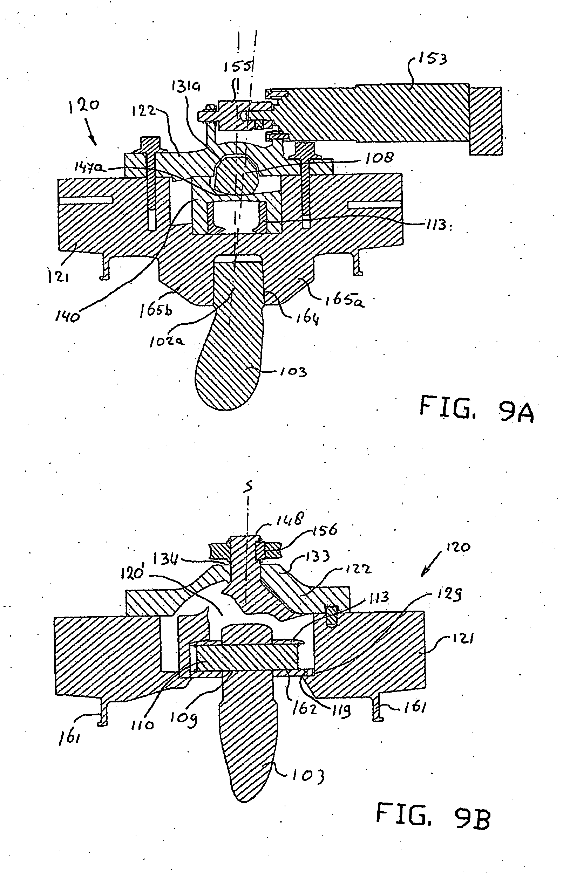

This has to do with the arrangement shown in figure 7D and figures 9A and 9B, cross-sections in figure 7C. In figure 7D the portion of the tow hitch member 101 that is engaged for use, for instance for coupling to a caravan, is placed in vertical alignment, wherein the axis V considered in projection on the plane of drawing coincides with the vertical. The axis S1 of portion 102 in the plane of projection (vertical plane, transverse to the direction of movement of the vehicle to which the tow hitch assembly 100 has been attached), coincides with the rotation axis S. Said rotation axis S therefore is inclined with respect to the vertical. In a vertical plane of projection transverse to the plane of drawing of figure 7D the rotation axis S may indeed coincide with the vertical (in projection). With the rotation axis S, also the bearing housing 1 20 is positioned in a tilted way, in this case at the angle α to the horizontal H, wherein the line T in figure 7D is shown as reference for the direction in which the bearing housing is inclined. All this results in the portion 103a being situated in the centre longitudinal plane M, and the same applies to the point of rotation for the tow hitch, on the intersection of the line S and the axis of the bearing pin 110 yet to be discussed.

The not further shown attachment means in the vehicle are adjusted to said inclined position of the bearing housing 120. By way of example the angle α may be 7 degrees and the angle β 10 degrees. In another example these angles may be approximately 4 and 12 degrees, respectively. Because of the angle between the proximal portion 102 and the portion 103a/104 it is achieved that in case of a rotation from the operative position to the inoperative position, in case of rotation about axis S, the upper side 104 of the tow hitch ball 104 is moved with a directional component in downward direction. As a result the tow hitch ball 104 will be able to move underneath past a bumper sooner.

In the cross-sections of figures 9A and 9B the composition of among others the bearing housing 120 is shown, in which it can be seen that the drive cam 108 is confined between the upper member 122 of the bearing housing 120, thereby accommodated in recess 131a, and is downwardly stopped by edge 147a of drive sleeve 140.

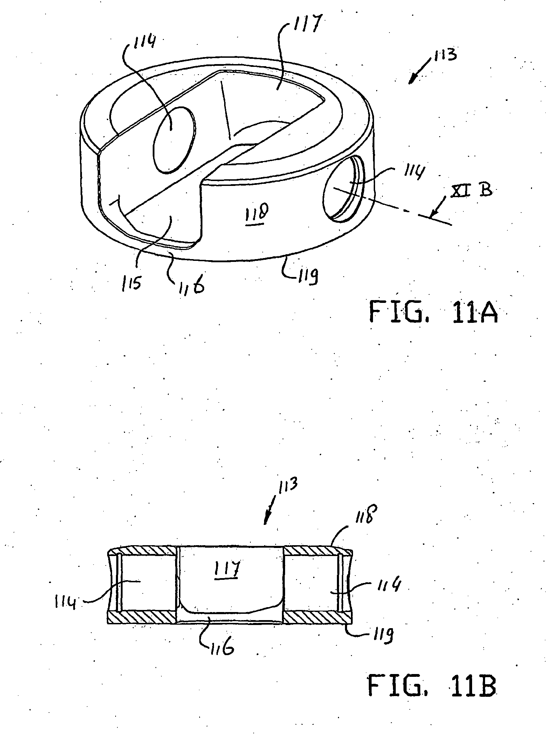

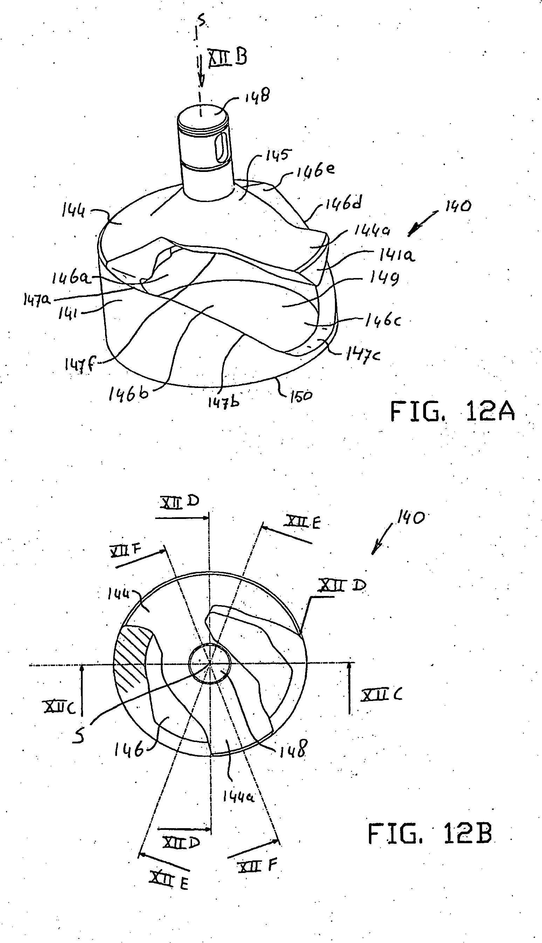

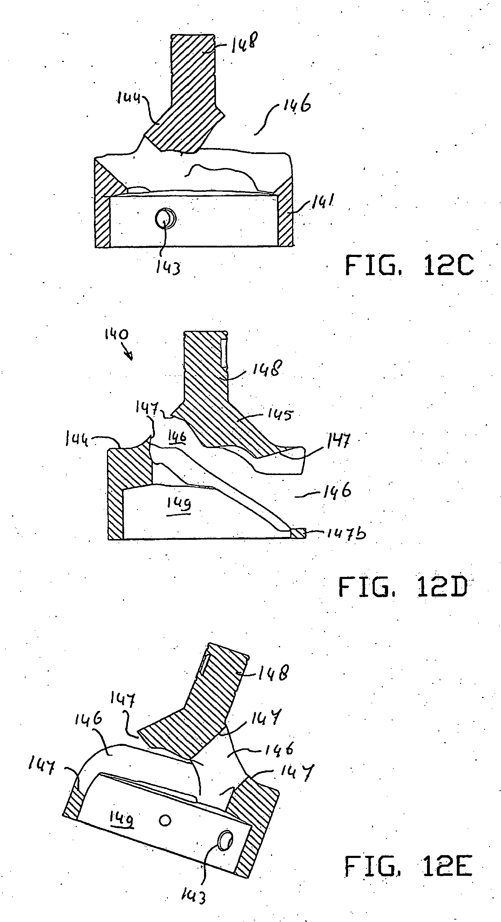

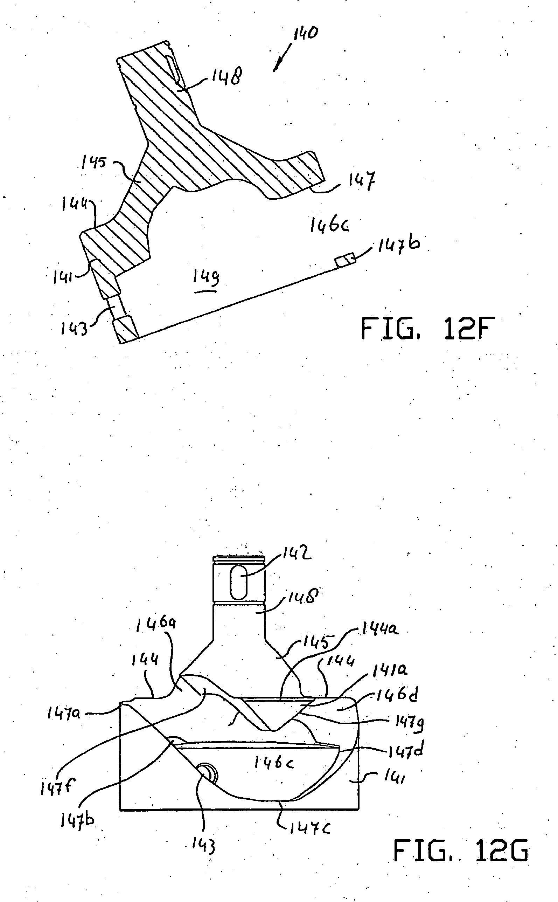

In the cross-section according to figure 9B it can be seen that the upper member 122 and the lower member 121 define a cavity 120', in which further bearing parts have been accommodated, namely a drive casing 140, shown in the figures 12A-G and a bearing part 113, shown in the figures 11A,B. It can be seen that a bearing pin 110 extends through the bore hole 109, which bearing pin is fixedly attached therein and projects to either side in order to really function as a bearing pin.

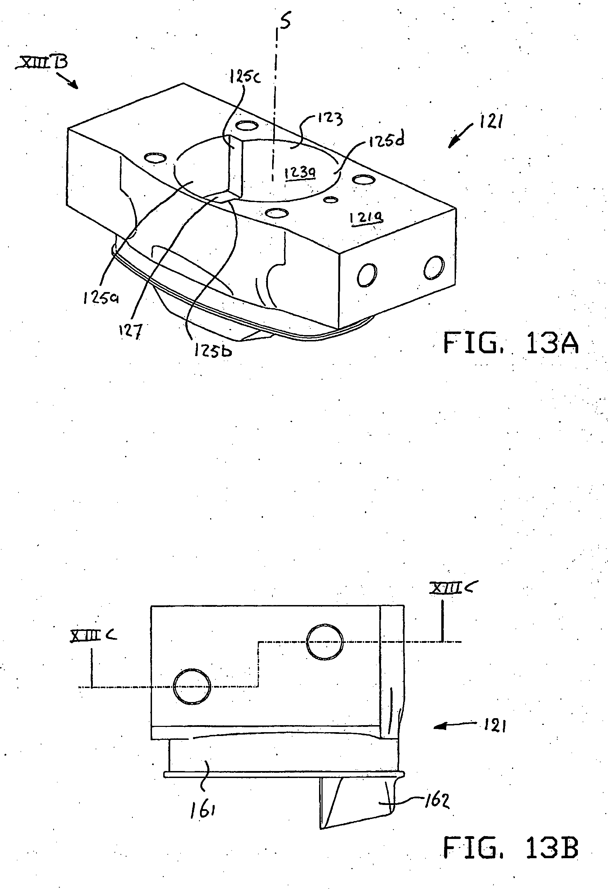

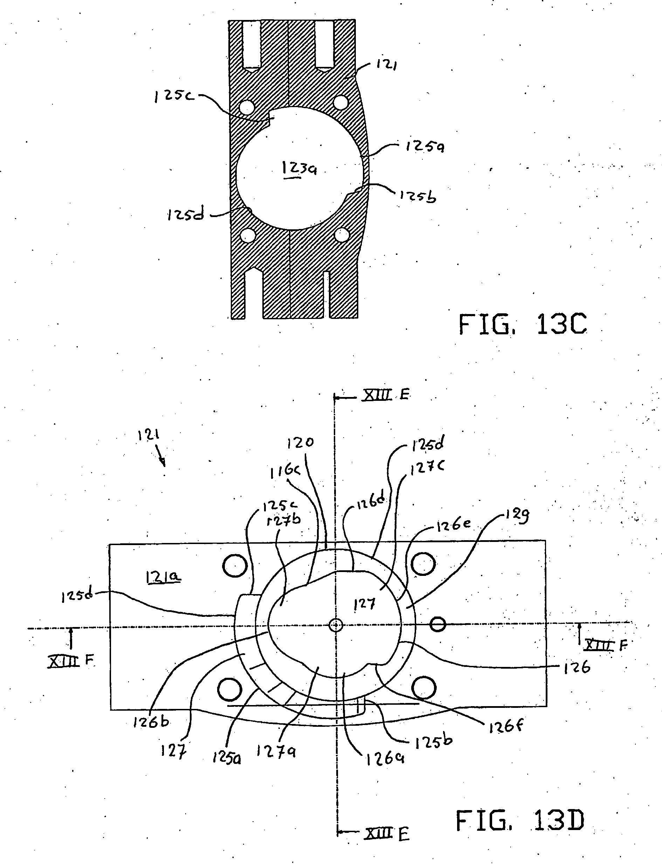

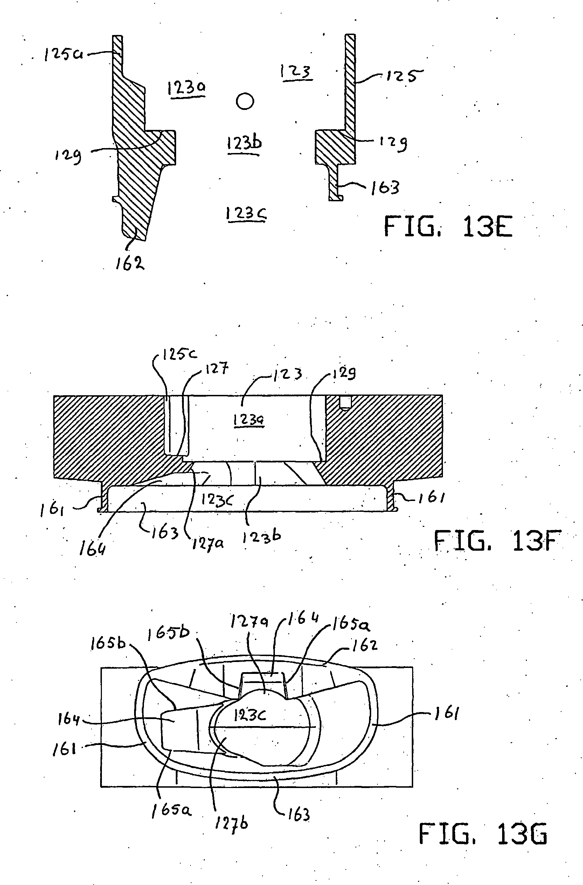

The bearing part 113 by approximation is formed like a circular disk, having a circumferential wall 118 and a central, vertical through-cavity 115. Transverse to the cavity 115 two bore holes 114 extend that are able to fittingly yet rotatably accommodate the bearing pin 110. The cavity 115 is bounded to one side by a wall 117, and bounded to the opposite side by a threshold 116. The lower side/edge 119 of the bearing part 113 is suitable to be supported rotatably about its axis on support edge 129 that has been formed in the lower member 121, also see figures 13D-F.

The bearing part or bearing disk 113 is accommodated in drive casing 140 so as to be rotatable about its axis, shown in figure 12A-G. The drive casing 140 forms a circle cylindrical accommodation space 149, accessible from below, for fitting accommodation of bearing part 113. When assembling this embodiment the tow hitch, after passing through the passage 123 in the lower bearing housing member 121 can be provided with the bearing disk 113 at the proximal end portion 102. It can then be inserted into the bearing part 140, after which the pin 110 can be inserted through the duct 146 into the holes 114. After that, the upper member 122 can be placed in order to close off the accommodation space 120'. For demounting a tool can be inserted through a hole 143 into the sleeve 140, in order to push the pin 110 out of the passages 114 and the duct 146.

The drive casing 140 has a circle cylindrical circumferential wall 141 and an upper wall 144 having a conical wall section 145 in the centre. A substantially V-shaped, continuous duct 146 is formed in the walls 141 and 144 (see for instance figure 12G). The V-shape is upwardly defined by lip 144a of the upper wall 144, and portion 141 a of circumferential wall 141 extending downwards therefrom. In the duct 146 can be distinguished end section 146a, inclined section 146b, turning section 146c, inclined section 146d and end section 146e. The duct sections 146a-e are bounded in downward direction by edges 147a-e and in upward direction by edges 147f,g. The specific shape of the duct 146 and its sections depends on the desired rotary movement of the tow hitch member.

In figure 12B the location of a number of cross-sections shown in the figures 12C-F is shown in top view of the drive casing 140.

The drive casing 140 is at the lower side provided with a circumferential support edge 150, that is also able to find support on support edge 129 of the lower member 121 of the bearing housing 120.

The lower member 121 of the bearing housing 120, shown in figures 13A-G is substantially elongated block-shaped, having a number of attachment holes for the upper member 122 therein, for attachment to a vehicle and for attachment of the motor 153. The lower member 121 has a vertical through-bore hole 123, in which, considered from top to bottom, several sections 123a-c can be distinguished. In the top member there is question of a cylindrical passage, bounded by wall sections 125a, 125b, 125c and 125d. The wall sections 125a and 125d are concentric with respect to the axis S, yet wall section 125a is situated at a larger distance therefrom. In addition two shoulders 125b and 125c have been formed at the location of the transitions between the walls sections 125a and 125d. At the lower edge of the wall sections 125a a step 127 has been formed. Said step forms a lower boundary for guiding the drive cam 108 during rotation, when it supports on the edge 147c of the drive sleeve 140. As can be seen in figure 13F said step 127 forms a small elevation with respect to the support edge 129. Said height corresponds with the height of the circumferential wall 141 at the location of edge 147c.

Below the support edge 129 passage section 123b is formed, defined by walls 126a-f deflecting downwardly inclined. The shape of said walls can be seen in figure 13D, as well as in figure 13G. In the passage 123b areas 127a, 127b are thus mutually differently oriented at 90 degrees, and widened area 127c is defined.

As can be seen in figure 13G two recesses 164 have been formed in the lowermost part of the passage 123b, which recesses are at an angle of 90 degrees. They are in line with the widened areas 127a and b. The recesses 164 are bounded by walls 165a, b.

Further downwards the passage section 123c is surrounded by pending stop edges 161, 162 for the tow hitch neck and the end positions.

As can be seen in figure 9A the recess 164 with inclined side edges 165a,b as regards dimensions is adjusted to the dimensions of the cam 102a.

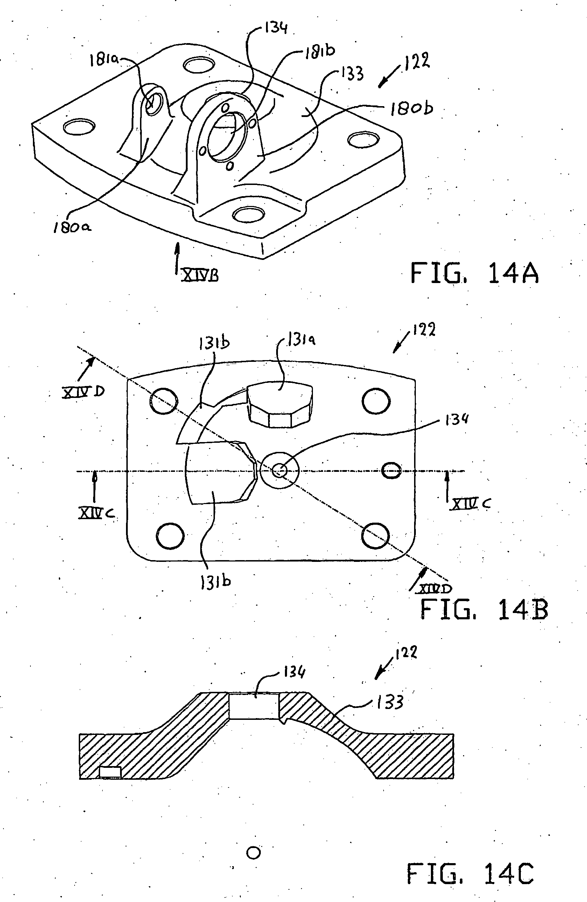

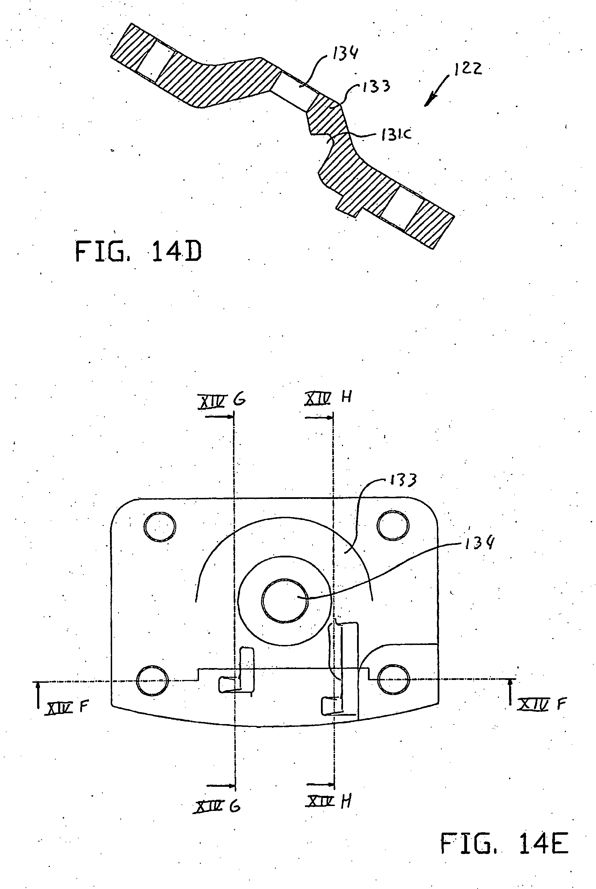

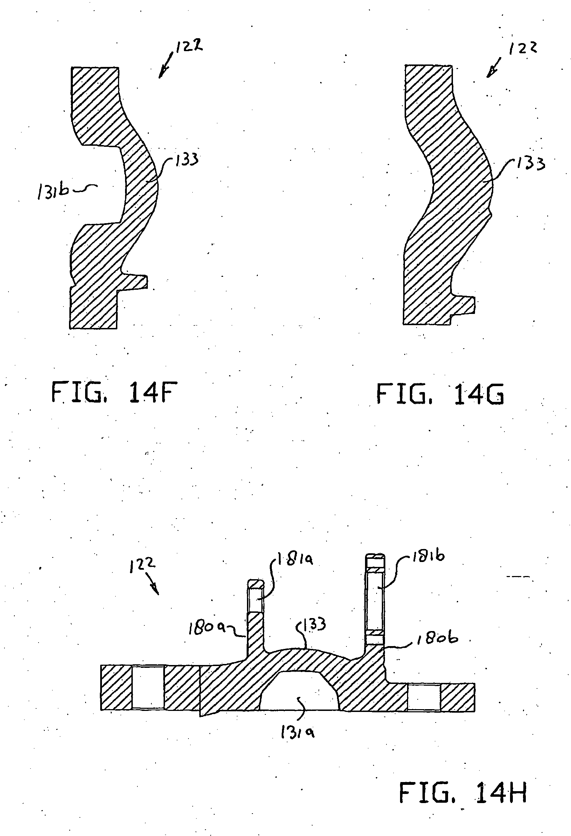

The upper member 122 of the bearing housing 120, shown in the figures 14A-H, is lid-shaped and at the upper side provided with two lips 180a, 180b having passage 181 a, 181 b, for mounting/guiding the drive motor 153 with drive shaft. As shown in figure 7A the drive motor will furthermore be attached to the lower member 121 of the bearing housing 120.

The upper member 122 has a conically elevated centre part 133, having a flat central part wherein a hole 134 has been disposed for fitting passage of shaft 148 of drive casing 140.

At the lower side/inner side the upper member 122 is provided with two blind recesses 131 a, 131 b, that are oriented at an angle of 90 degrees to each other, wherein in between them recess 131 c has been disposed that is also blind yet more slit-shaped. The specific shape of this blind duct 131a-c is further shown in the figures 14C-H, and depends on the desired design.

The said parts are adjusted such to each other that the drive cam 108 extends through the duct 146 up into the recesses 131 a-c in the upper member 122 and when necessary in the space which is bounded by the wall sections 125a,b,c and step 127. The drive cam 108 is then fittingly yet movably accommodated in the duct 146.

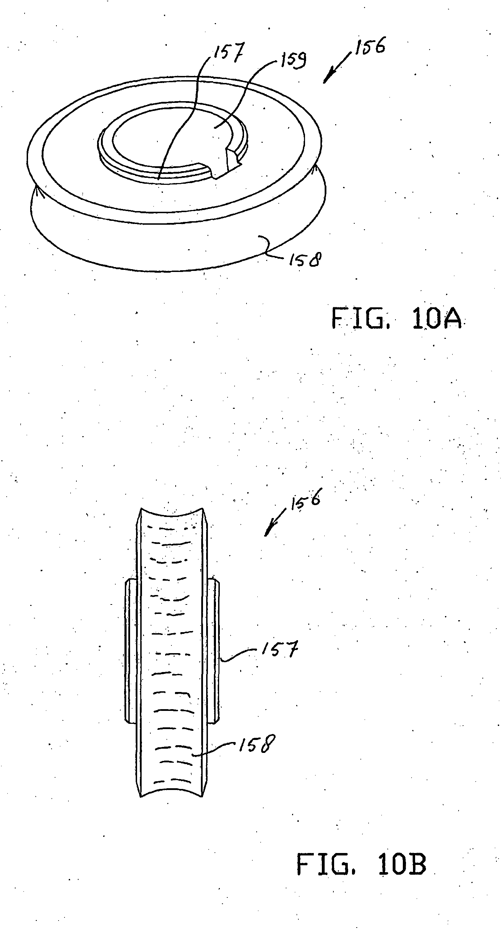

As can be seen in figures 10A and 10B the worm wheel comprises a worm wheel surface 158, a bore hole 159 for attachment to shaft 148 (see for instance figure 9B), and a locking ring 157.

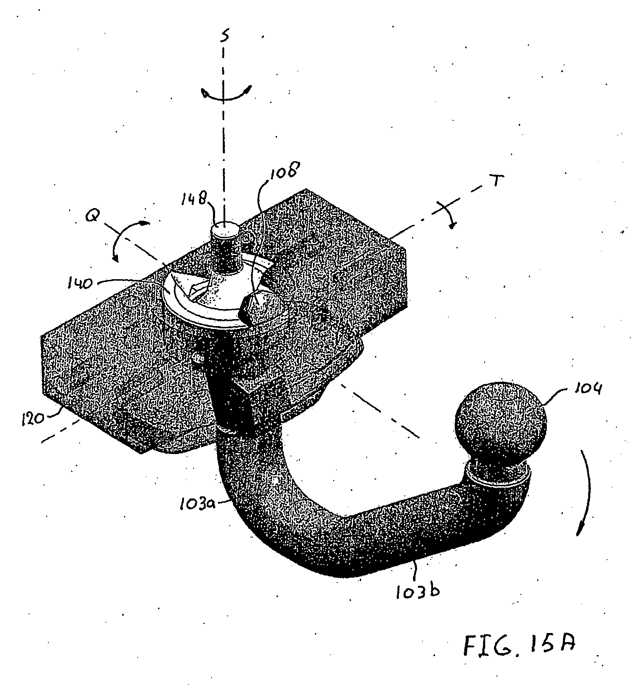

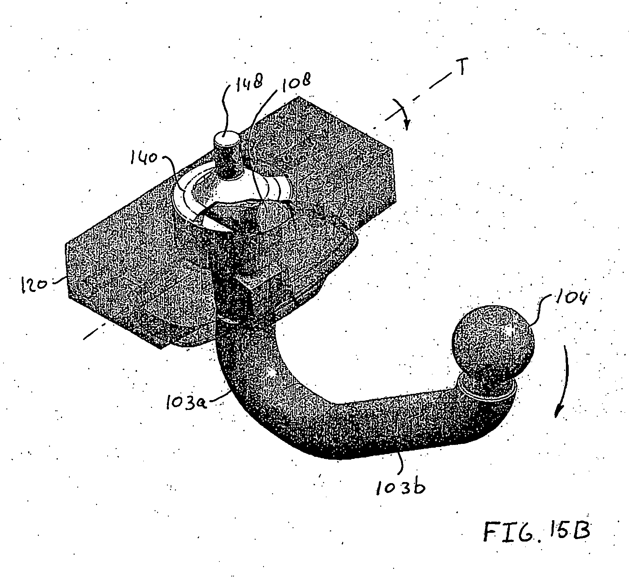

In the situation shown in figures 7A-D, also shown in figure 15A, the tow hitch member portion 103a is positioned vertical, as indicated before. The proximal portion 102 extends in the bearing part or bearing disk 113, with the pin 110 inserted through bore hole 109, and in holes 114. In principle, when no further parts would be present, the tow hitch would be rotatable with respect to bearing part 113 about pin 110. The drive cam 108 now extends through duct section 106a (also see figure 15B), and in recess 131 a.

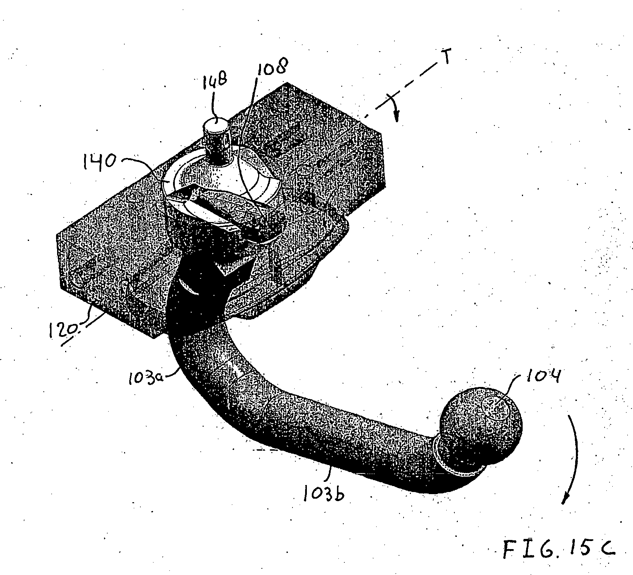

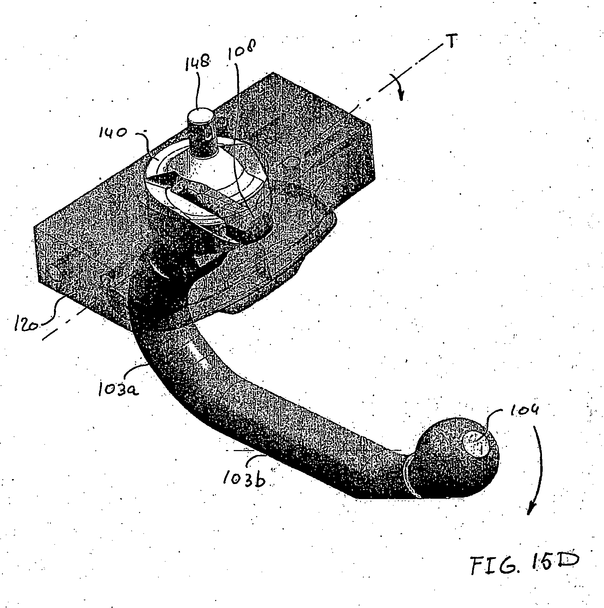

If it is desired to rotate the tow hitch member 101 over 90 degrees into an inoperative position, where it is oriented substantially transverse to the driving direction, the motor 153 is excited, as a result of which worm roller 155 is driven and thus worm wheel 156 is rotated in rotation about rotation axis S. As a result the shaft 148 is also rotated, and thus also the drive casing 140. Due to engagement of the edge 147f onto the drive cam 108 the latter is urged downwards, see figures 15C and 15D. The cam 102a is guided in this movement by the walls 165a,b of recess 164. The tow hitch member 101 is here rotated about the pin 110, in figure 7D parallel to, particularly coinciding with axis T.

Finally the lower surface of the drive cam 108 reaches the edge section 147c, so that further rotation about the pin 110 is stopped.

The end of the drive cam 108 has now left the recess 131 a and now is positioned entirely in the duct space bounded by the walls 125a-c and step 127.

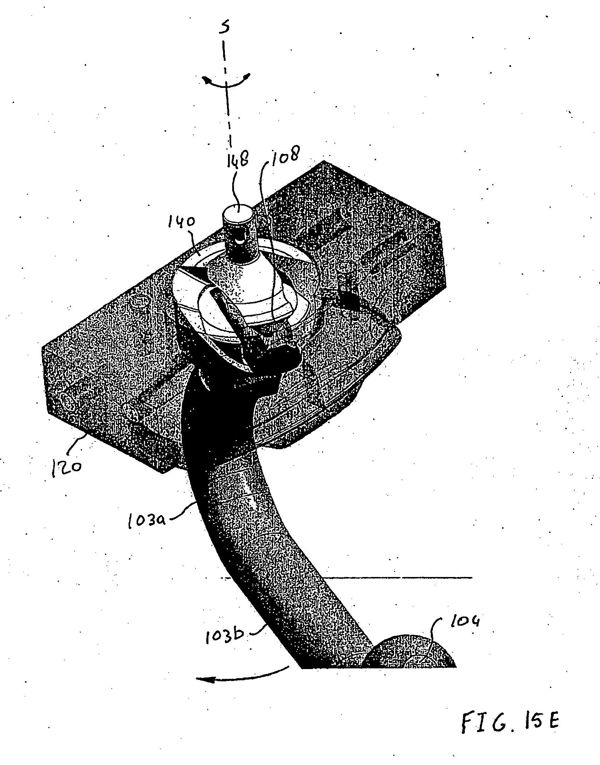

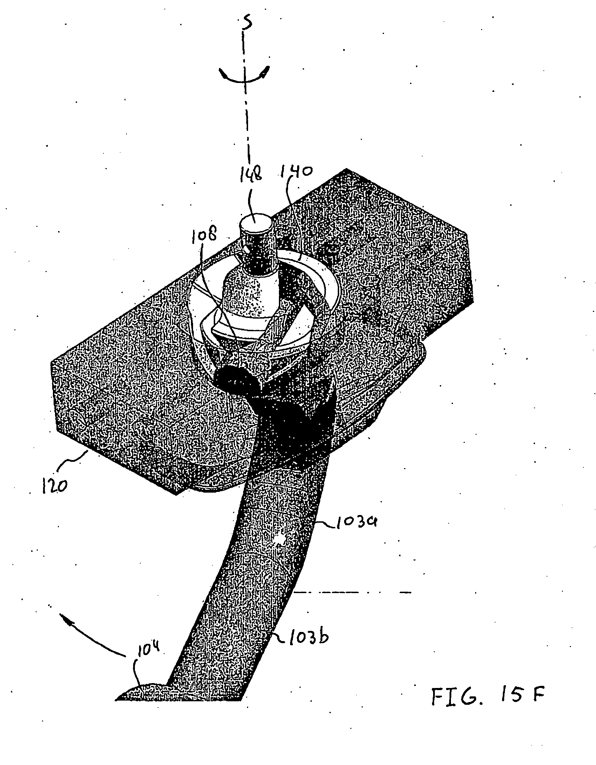

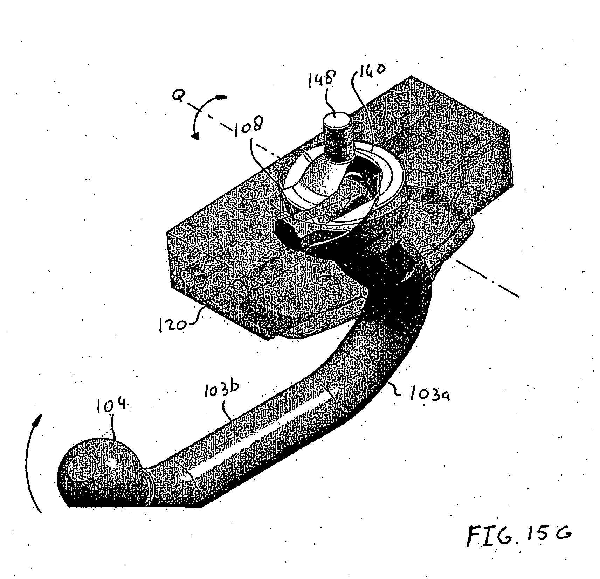

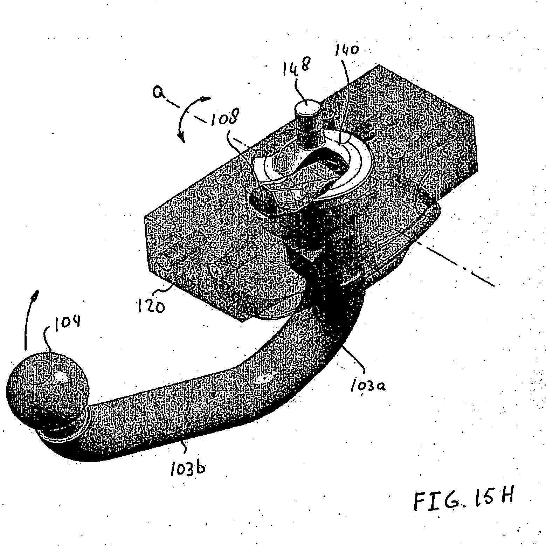

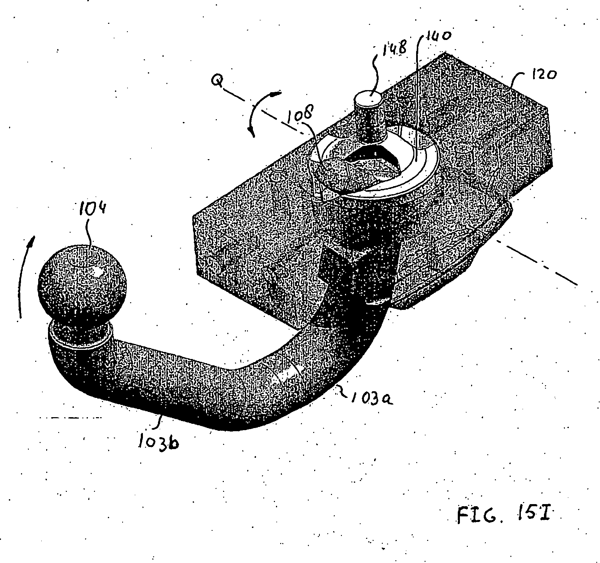

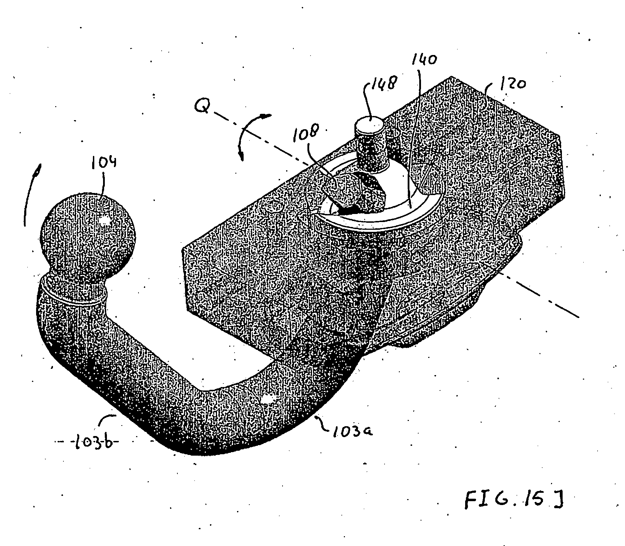

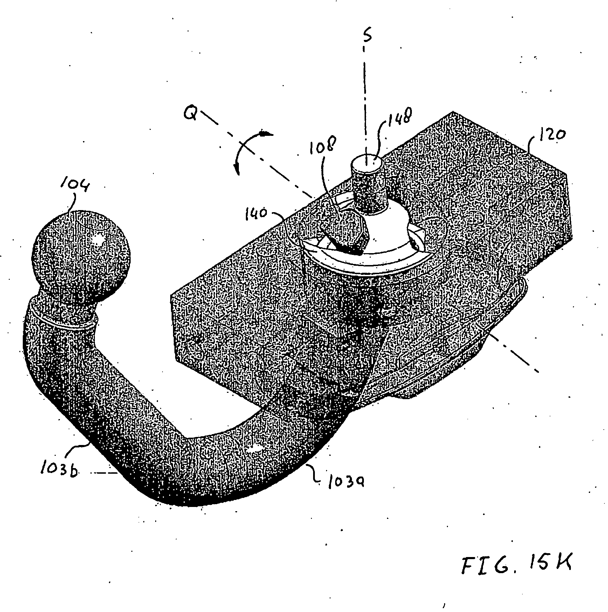

The motor 153 remains activated, as a result of which the drive casing, with edge section 147d, will exert a horizontal force on the drive cam 108. The lip 144a with downward projection 141 a however prevents an upward movement of the drive cam 108. As a result thereof the drive cam 140 will take along drive cam 108 in rotation, wherein the drive cam 108 with the projection moves through duct 131 c, and via consecutive movements, shown in figures 15E, 15F and 15G ends up in the position shown in figure 15H. The bearing part 113 here rotates over the support edge 129, about axis S. Finally the drive cam has arrived in abutment to the shoulder 125c, so that it cannot move further than the 90 degrees or transverse position. The drive motor 153 however remains excited, as a result of which the drive casing 140 rotates further about axis S, and the drive cam runs on edges 145d and 145e. The drive cam 108 is now situated under the recess 131 b, and may swing upwards, about the axis Q of the pivot pin 110. Said motion is shown in figure 15I, 15J and 15K and 15L, in the latter case with the drive cam 108 accommodated in the duct section 146e.

The cam 102a is now inserted in the other recess 164, fittingly in between its walls 165a,b. The tow hitch is now locked in the inoperative position.

If the tow hitch member 101 has to be transferred from the inoperative position to the operative position the drive motor 153 is excited in opposite direction, as a result of which the motion described above is carried out in reverse order.

## Claims

1. Tow hitch assembly for a vehicle, having a tow hitch member (1; 101) which at a distal end portion is provided with a neck part (3; 103) having a hitch ball (4; 104) at its end and which with a proximal end portion (2; 102) is connected to a holder member to be attached to the vehicle, wherein the holder member and the proximal end portion for a hinge connection with each other for rotation of the tow hitch member about at least two rotation axes including an angle with each other, in a mouvement between an extended position and a stowed away inoperative position, the proximal end portion being provided with a drive cam (8; 108) that is in engagement with drive means for the drive cam,
**characterized in that** the rotation takes place about a second rotation axis (F) and a third rotation axis (G), that are horizontal or at a small angle to the horizontal, and may be perpendicular to each other, and **in that** the holder member comprised a bearing housing (20; 120) forming a first cam track for guiding the drive cam in its movement, and the drive means comprise a drive sleeve (140) provided with an accommodation space for driving engagement of the drive cam by means of rotation of the drive sleeve.

2. Tow hitch assembly according to claim 1, wherein the rotation can take place about at least two rotation axes (E,F,G) that are perpendicular to each other.

3. Tow hitch assembly according to claim 1 or 2, wherein the first rotation axis (S) is vertical or at a small angle to the vertical.

4. Tow hitch assembly according to claim 3, wherein the first rotation axis is at a small angle to the vertical, considered in a vertical plane of projection transverse to the driving direction of the vehicle, wherein, preferably, the first rotation axis is situated in a vertical plane perpendicular to a vertical centre longitudinal plane of the vehicle.

5. Tow hitch assembly according to claim 4, wherein the first rotation axis slopes upwards towards the side to which the tow hitch member is moved in the movement to the inoperative position.

6. Tow hitch assembly according to claim 1 wherein, the tow hitch member can hinge about the second and third rotation axis for movement between at least one high position and a low position of the tow hitch ball, wherein, preferably, the tow hitch member both in the inoperative position and the operative position takes a high position with the tow hitch ball, in which position the tow hitch ball is situated higher than the tow hitch neck which connects thereto.

7. Tow hitch assembly according to any one of the preceding claims, wherein the first cam track is substantially U-shaped, wherein, preferably, the legs of the U-shape in top view mutually include an angle of approximately 90 degrees.

8. Tow hitch assembly according to claim 7, wherein the accommodation space is formed by a second cam track, for subjecting the drive cam to a movement, wherein the second cam track can be V-shaped.

9. Tow hitch assembly according to claim 8, wherein the drive sleeve (140) is situated between the proximal end and the bearing housing.

10. Tow hitch assembly according to claim 8, wherein the accommodation space forms a passage for the drive cam.

11. Tow hitch assembly according to claim 8, wherein the drive sleeve (140) is situated around the bearing housing (120).

12. Tow hitch assembly according to claim 8, wherein the first cam track forms a passage for the drive cam.

13. Tow hitch assembly according to any one of the claims 7-12, wherein the proximal end portion is provided with an added orienting member and the bearing housing is provided with a guide track for the orienting member, wherein, preferably, the orienting member forms a protrusion.

14. Tow hitch assembly according to claim 13, wherein the orienting member comprises a pin and an orienting plate bearing mounted thereon so as to be freely rotatable.

15. Tow hitch assembly according to claim 13, wherein the orienting member comprises a ring that is arranged on the proximal end portion so as to be rotatable about a pin, wherein, preferably, the ring is supported on the guide track for movement therealong.

16. Tow hitch assembly according to claim 14 or 15, wherein the axis of the pin coincides with said second and third rotation axes, in two positions rotated with respect to the first rotation axis.

17. Tow hitch assembly according to any one of the claims 13-16, wherein the guide track is arranged at the inside of the bearing housing.

18. Tow hitch assembly according to any one of the claims 13-17, wherein the guide track extends concentrically about the first rotation axis.

19. Tow hitch assembly according to any one of the claims 13-18, comprising an electromotor (53) for driving the drive sleeve.

20. Tow hitch assembly according to any one of the claims 13-18, wherein the drive sleeve (140) is rotatable about the first hinge axis.

21. Tow hitch assembly according to any one of the claims 7-20, wherein the first cam track has a substantially vertically oriented first end portion which defines the position of the first cam in the operative position of the tow hitch member.

22. Tow hitch assembly according to any one of the claims 7-21, wherein the first cam track has a substantially vertically oriented second end portion which defines the position of the first cam in the inoperative position of the tow hitch member.

23. Tow hitch assembly according to any one of the preceding claims, wherein the proximal end portion has a spherical end.

24. Tow hitch assembly according to any one of the preceding claims, wherein the proximal end portion is provided with a drive cam or control cam and a first and a second guide track for them, wherein the drive cam extends in both guide tracks and both guide tracks have a mutually different course and are movable with respect to each other for movement of the drive cam, wherein, preferably, the first guide track is fixedly positioned and the second guide track is movably positioned, wherein, preferably, the first and the second guide tracks are movable with respect to each other by rotation about one single rotation axis, wherein preferably, the drive cam extends radially or with a radial directional component with respect to the rotation axis.

25. Tow hitch assembly according to claim 24, wherein the first and second guide tracks are arranged in a first surrounding body, such as hollow body, and a second surrounding body, such as hollow body, respectively, wherein the first body surrounds the second body and the proximal end portion is accommodated in the second body.

26. Tow hitch assembly according to claim 25, wherein the first body is driven and the second body is stationary.

27. Tow hitch assembly according to claim 25, wherein the second body is driven and the first body is stationary.

28. Tow hitch assembly according to any one of the claims 24-27, wherein the first guide track is substantially V-shaped and the second guide track is substantially U-shaped.

29. Tow hitch assembly according to any one of the claims 24-27, wherein the second guide track is substantially V-shaped and the first guide track is substantially U-shaped.

30. Tow hitch assembly according to any one of the preceding claims, wherein the proximal end portion is provided with a drive cam or control cam and at least one driven guide track for it for driving the drive cam.

31. Tow hitch assembly according to claim 30, wherein the rotation axes form an intersection in the proximal end portion, which intersection forms a multiple point of rotation, and wherein the drive cam is situated at a side of the intersection facing away from the tow hitch neck.

32. Tow hitch assembly according to any one of the preceding claims, wherein a first rotation axis is at a small angle to the vertical, considered in a vertical plane of projection transverse to the driving direction of the vehicle, wherein the tow hitch member is rotatable about a combined point of rotation, wherein the tow hitch neck in an area including and connecting to the tow hitch ball, is situated in a vertical centre longitudinal plane of the vehicle, wherein the point of rotation is also situated in said centre longitudinal plane.

33. Tow hitch assembly according to any one of the preceding claims, wherein the holder member and the proximal end portion form a rotary connection with each other for rotation of the tow hitch member about a point of rotation about more than one rotation axis, wherein a first rotation axis is at a small angle to the vertical, considered in a vertical plane of projection transverse to the driving direction of the vehicle, wherein the tow hitch neck in an area including and connecting to the tow hitch ball, is situated in a vertical centre longitudinal plane of the vehicle, wherein the point of rotation is also situated in said centre longitudinal plane.

34. Tow hitch assembly according to claim 32 or 33, wherein the proximal end portion, considered in projection on a vertical transverse plane of the vehicle, with its axis coincides with the projection of the first rotation axis.

## Patentansprüche

1. Anhängerkupplungsanordnung für ein Fahrzeug mit einem Anhängerkupplungselement (1; 101), welches an einem distalen Endabschnitt mit einem Halsteil (3; 103) mit einem Kugelkopf (4; 104) an seinem Ende versehen ist und welches mit einem proximalen Endabschnitt (2; 102) mit einem Halteelement verbunden ist, um an dem Fahrzeug befestigt zu werden, wobei das Halteelement und der proximale Endabschnitt zur Rotation des Anhängerkupplungselements um mindestens zwei Rotationsachsen, welche einen Winkeln miteinander einschließen, in einer Bewegung zwischen einer ausgefahrenen Position und einer eingefahrenen Ruheposition miteinander eine Gelenkverbindung bilden, wobei der proximale Endabschnitt mit einer Antriebsnocke (8; 108) versehen ist, welche sich mit Antriebsmitteln für die Antriebsnocke in Eingriff befindet,
**dadurch gekennzeichnet, dass** die Rotation um eine zweite Rotationsachse (F) und eine dritte Rotationsachse (G) stattfindet, welche horizontal oder in einem kleinen Winkel zu der Horizontalen sind und senkrecht zueinander sein können, und dass das Halteelement ein Lagergehäuse (20; 120) umfasst, welches eine erste Nockenbahn zum Führen der Antriebsnocke in ihrer Bewegung ausbildet, und dass die Antriebsmittel eine Antriebsbuchse (140) umfassen, welche mit einem Aufnahmeraum für einen Antriebseingriff der Antriebsnocke mittels einer Rotation der Antriebsbuchse versehen ist.

2. Anhängerkupplungsanordnung nach Anspruch 1, wobei die Rotation um mindestens zwei Rotationsachsen (E, F, G) stattfinden kann, welche senkrecht zueinander sind.

3. Anhängerkupplungsanordnung nach Anspruch 1 oder 2, wobei die erste Rotationsachse (S) vertikal oder in einem kleinen Winkel zur Vertikalen ist.

4. Anhängerkupplungsanordnung nach Anspruch 3, wobei sich die erste Rotationsachse in einem kleinen Winkel zur Vertikalen, betrachtet in einer vertikalen Projektionsebene quer zur Fahrrichtung des Fahrzeugs, befindet, wobei sich die erste Rotationsachse vorzugsweise in einer vertikalen Ebene senkrecht zu einer vertikalen Mittellängsebene des Fahrzeugs befindet.

5. Anhängerkupplungsanordnung nach Anspruch 4, wobei die erste Rotationsachse schräg nach oben zu der Seite verläuft, zu welcher das Anhängerkupplungselement bei der Bewegung in die Ruheposition bewegt wird.

6. Anhängerkupplungsanordnung nach Anspruch 1, wobei sich das Anhängerkupplungselement für eine Bewegung zwischen mindestens einer hohen Position und einer niedrigen Position des Kugelkopfs um die zweite und dritte Rotationsachse drehen kann, wobei das Anhängerkupplungselement vorzugsweise sowohl in der Ruheposition als auch in der Betriebsposition eine hohe Position an dem Kugelkopf einnimmt, wobei der Kugelkopf in dieser Position höher angeordnet ist als der Anhängerkupplungshals, welcher damit verbunden ist.

7. Anhängerkupplungsanordnung nach einem der vorhergehenden Ansprüche, wobei die erste Nockenbahn im Wesentlichen U-förmig ist, wobei die Schenkel der U-Form in einer Draufsicht gemeinsam vorzugsweise einen Winkel von näherungsweise 90 Grad einschließen.

8. Anhängerkupplungsanordnung nach Anspruch 7, wobei der Aufnahmeraum durch eine zweite Nockenbahn gebildet ist, um die Antriebsnocke einer Bewegung auszusetzen, wobei die zweite Nockenbahn V-förmig sein kann.

9. Anhängerkupplungsanordnung nach Anspruch 8, wobei sich die Antriebsbuchse (140) zwischen dem proximalen Ende und dem Lagergehäuse befindet.

10. Anhängerkupplungsanordnung nach Anspruch 8, wobei der Aufnahmeraum einen Durchgang für die Antriebsnocke bildet.

11. Anhängerkupplungsanordnung nach Anspruch 8, wobei die Antriebsbuchse (140) um das Lagergehäuse (120) angeordnet ist.

12. Anhängerkupplungsanordnung nach Anspruch 8, wobei die erste Nockenbahn einen Durchgang für die Antriebsnocke bildet.

13. Anhängerkupplungsanordnung nach einem der Ansprüche 7-12, wobei der proximale Endabschnitt mit einem hinzugefügten Ausrichtungselement versehen ist und das Lagergehäuse mit einer Führungsbahn für das Ausrichtungselement versehen ist, wobei das Ausrichtungselement vorzugsweise einen Vorsprung bildet.

14. Anhängerkupplungsanordnung nach Anspruch 13, wobei das Ausrichtungselement einen Stift und ein ausrichtendes Plattenlager umfasst, welches daran angebracht ist, um frei drehbar zu sein.

15. Anhängerkupplungsanordnung nach Anspruch 13, wobei das Ausrichtungselement einen Ring umfasst, welcher so an dem proximalen Endabschnitt angeordnet ist, dass er um einen Stift drehbar ist, wobei der Ring vorzugsweise an der Führungsbahn für eine Bewegung daran entlang gehalten wird.

16. Anhängerkupplungsanordnung nach Anspruch 14 oder 15, wobei die Achse des Stiftes mit den zweiten und dritten Rotationsachsen in zwei Positionen bezogen auf die erste Rotationsachse gedreht zusammenfällt.

17. Anhängerkupplungsanordnung nach einem der Ansprüche 13-16, wobei die Führungsbahn an der Innenseite des Lagergehäuses angeordnet ist.

18. Anhängerkupplungsanordnung nach einem der Ansprüche 13-17, wobei sich die Führungsbahn konzentrisch um die erste Rotationsachse erstreckt.

19. Anhängerkupplungsanordnung nach einem der Ansprüche 13-18, umfassend einen Elektromotor (53) zum Antreiben der Antriebsbuchse.

20. Anhängerkupplungsanordnung nach einem der Ansprüche 13-18, wobei die Antriebsbuchse (140) um die erste Gelenkachse drehbar ist.

21. Anhängerkupplungsanordnung nach einem der Ansprüche 7-20, wobei die erste Nockenbahn einen im Wesentlichen vertikal ausgerichteten ersten Endabschnitt aufweist, welcher die Position der ersten Nocke in der Betriebsposition des Anhängerkupplungselements definiert.

22. Anhängerkupplungsanordnung nach einem der Ansprüche 7-21, wobei die erste Nockenbahn einen im Wesentlichen vertikal ausgerichteten zweiten Endabschnitt aufweist, welcher die Position der ersten Nocke in der Ruheposition des Anhängerkupplungselements definiert.

23. Anhängerkupplungsanordnung nach einem der vorhergehenden Ansprüche, wobei der proximale Endabschnitt ein kugelförmiges Ende aufweist.

24. Anhängerkupplungsanordnung nach einem der vorhergehenden Ansprüche, wobei der proximale Endabschnitt mit einer Antriebsnocke oder Steuernocke und einer ersten und einer zweiten Führungsbahn für diese versehen ist, wobei sich die Antriebsnocke in beiden Führungsbahnen erstreckt und beide Führungsbahnen einen gegenseitig unterschiedlichen Verlauf aufweisen und für eine Bewegung der Antriebsnocke bezogen aufeinander beweglich sind, wobei vorzugsweise die erste Führungsbahn fest angeordnet ist und die zweite Führungsbahn beweglich angeordnet ist, wobei die erste und zweite Führungsbahn vorzugsweise durch Rotation um eine einzige Rotationsachse bezogen aufeinander beweglich sind, wobei sich die Antriebsnocke vorzugsweise radial oder mit einer radialen Richtungskomponente bezogen auf die Rotationsachse erstreckt.

25. Anhängerkupplungsanordnung nach Anspruch 24, wobei die erste und zweite Führungsbahn in einem ersten umgebenden Körper, wie z.B. einem Hohlkörper, bzw. einem zweiten umgebenden Körper, wie z.B. einem Hohlkörper, angeordnet sind, wobei der erste Körper den zweiten Körper umgibt und der proximale Endabschnitt in dem zweiten Körper aufgenommen ist.

26. Anhängerkupplungsanordnung nach Anspruch 25, wobei der erste Körper angetrieben wird und der zweite Körper ruhend ist.

27. Anhängerkupplungsanordnung nach Anspruch 25, wobei der zweite Körper angetrieben wird und der erste Körper ruhend ist.

28. Anhängerkupplungsanordnung nach einem der Ansprüche 24-27, wobei die erste Führungsbahn im Wesentlichen V-förmig und die zweite Führungsbahn im Wesentlichen U-förmig ist.

29. Anhängerkupplungsanordnung nach einem der Ansprüche 24-27, wobei die zweite Führungsbahn im Wesentlichen V-förmig und die erste Führungsbahn im Wesentlichen U-förmig ist.

30. Anhängerkupplungsanordnung nach einem der vorhergehenden Ansprüche, wobei der proximale Endabschnitt mit einer Antriebsnocke oder einer Steuernocke und mindestens einer angetriebenen Führungsbahn dafür zum Antreiben der Antriebsnocke versehen ist.

31. Anhängerkupplungsanordnung nach Anspruch 30, wobei die Rotationsachsen in dem proximalen Endabschnitt einen Schnittpunkt bilden, wobei der Schnittpunkt einen mehrfachen Rotationspunkt bildet und wobei sich die Antriebsnocke an einer Seite des Schnittpunkts befindet, welche von dem Anhängerkupplungshals abgewandt ist.

32. Anhängerkupplungsanordnung nach einem der vorhergehenden Ansprüche, wobei sich eine erste Rotationsachse in einem kleinen Winkel zur Vertikalen, betrachtet in einer vertikalen Projektionsebene quer zur Fahrrichtung des Fahrzeugs, befindet, wobei das Anhängerkupplungselement um einen kombinierten Rotationspunkt drehbar ist, wobei sich der Anhängerkupplungshals in einem Bereich, welcher den Kugelkopf umfasst und damit verbunden ist, in einer vertikalen Mittellängsebene des Fahrzeugs befindet, wobei sich der Rotationspunkt ebenfalls in der Mittellängsebene befindet.

33. Anhängerkupplungsanordnung nach einem der vorhergehenden Ansprüche, wobei das Halteelement und der proximale Endabschnitt miteinander eine Drehverbindung für eine Rotation des Anhängerkupplungselements um einen Rotationspunkt um mehr als eine Rotationsachse bilden, wobei sich eine erste Rotationsachse in einem kleinen Winkel zur Vertikalen, betrachtet in einer vertikalen Projektionsebene quer zur Fahrrichtung des Fahrzeugs, befindet, wobei der Anhängerkupplungshals in einem Bereich, welcher den Kugelkopf umfasst und damit verbunden ist, in einer vertikalen Mittellängsebene des Fahrzeugs angeordnet ist, wobei sich der Rotationspunkt ebenfalls in dieser Mittellängsebene befindet.

34. Anhängerkupplungsanordnung nach Anspruch 32 oder 33, wobei der proximale Endabschnitt, in Projektion auf eine vertikale Querebene des Fahrzeugs betrachtet, mit seiner Achse mit der Projektion der ersten Rotationsachse zusammenfällt.

## Revendications

1. Ensemble crochet de remorquage pour un véhicule, comprenant un élément de crochet de remorquage (1 ; 101) dont la partie d'extrémité distale présente une partie de col (3 ; 103) munie d'une boule d'attelage (4 ; 104) et dont la partie d'extrémité proximale (2 ; 102) est reliée à un élément de maintien à fixer au véhicule, dans lequel l'élément de maintien et la partie d'extrémité proximale forment entre eux une connexion articulée qui permet à l'élément de crochet d'attelage de pivoter autour de deux axes de rotation au moins faisant entre eux un angle, selon un mouvement entre une position déployée et une position non fonctionnelle rangée, la partie d'extrémité proximale étant munie d'une came d'entraînement (8 ; 108) qui est en prise avec des moyens d'entraînement de la came d'entraînement, **caractérisé en ce que** la rotation se fait autour d'un deuxième axe de rotation (F) et d'un troisième axe de rotation (G), qui sont horizontaux ou font un petit angle par rapport à l'horizontale, et peuvent être perpendiculaires entre eux, et dans lequel l'élément de maintien comprend un logement de palier (20 ; 120) qui forme un premier chemin de came destiné à guider la came d'entraînement dans son mouvement, et les moyens d'entraînement comprennent un manchon d'entraînement (140) doté d'un espace de réception destiné à une mise en prise d'entraînement de la came d'entraînement au moyen de rotation du manchon d'entraînement.

2. Ensemble crochet de remorquage selon la revendication 1, dans lequel la rotation peut se faire autour de deux axes de rotation au moins (E, F, G) qui sont perpendiculaires entre eux.

3. Ensemble crochet de remorquage selon la revendication 1 ou la revendication 2, dans lequel le premier axe de rotation (S) est vertical ou fait un petit angle par rapport à la verticale.

4. Ensemble crochet de remorquage selon la revendication 3, dans lequel le premier axe de rotation fait un petit angle par rapport à la verticale, considéré dans un plan de projection vertical transversal à la direction de conduite du véhicule, dans lequel, de préférence, le premier axe de rotation se situe dans un plan vertical perpendiculaire à un plan longitudinal central vertical du véhicule.

5. Ensemble crochet de remorquage selon la revendication 4, dans lequel le premier axe de rotation est en pente vers le haut vers le côté vers lequel l'élément de crochet de remorquage se déplace dans le mouvement vers la position non fonctionnelle.

6. Ensemble crochet de remorquage selon la revendication 1, dans lequel l'élément de crochet de remorquage peut s'articuler autour du deuxième et du troisième axe de rotation pour un mouvement entre au moins une position haute et une position basse de la boule d'attelage, dans lequel, de préférence, l'élément de crochet de remorquage, dans la position non fonctionnelle et dans la position fonctionnelle, prend une position haute avec la boule d'attelage, position dans laquelle la boule d'attelage se situe plus haut que le col de crochet de remorquage qui y est relié.

7. Ensemble crochet de remorquage selon l'une quelconque des revendications précédentes, dans lequel le premier chemin de came présente une forme sensiblement en U, dans lequel, de préférence, les branches de la forme en U dans une vue de dessus, font entre elles un angle de 90 degrés environ.

8. Ensemble crochet de remorquage selon la revendication 7, dans lequel l'espace de réception est constitué par un second chemin de came, destiné à soumettre la came d'entraînement à un mouvement, dans lequel le second chemin de came peut présenter une forme en V.

9. Ensemble crochet de remorquage selon la revendication 8, dans lequel le manchon d'entraînement (140) se situe entre l'extrémité proximale et le logement de palier.

10. Ensemble crochet de remorquage selon la revendication 8, dans lequel l'espace de réception forme un passage pour la came d'entraînement.

11. Ensemble crochet de remorquage selon la revendication 8, dans lequel le manchon d'entraînement (140) se situe autour du logement de palier (120).

12. Ensemble crochet de remorquage selon la revendication 8, dans lequel le premier chemin de came forme un passage pour la came d'entraînement.

13. Ensemble crochet de remorquage selon l'une quelconque des revendications 7 à 12, dans lequel la partie d'extrémité proximale est dotée d'un élément d'orientation supplémentaire et le logement de palier est doté d'un chemin de guidage pour l'élément d'orientation, dans lequel, de préférence, l'élément d'orientation forme une saillie.

14. Ensemble crochet de remorquage selon la revendication 13, dans lequel l'élément d'orientation comprend une broche et un palier de plaque d'orientation montés dessus afin de pouvoir tourner librement.

15. Ensemble crochet de remorquage selon la revendication 13, dans lequel l'élément d'orientation comprend un anneau qui est disposé sur la partie d'extrémité proximale de manière à pouvoir tourner autour d'une broche, dans lequel, de préférence, l'anneau est supporté sur le chemin de guidage pour un déplacement le long de celui-ci.

16. Ensemble crochet de remorquage selon la revendication 14 ou la revendication 15, dans lequel l'axe de la broche coïncide avec lesdits deuxième et troisième axes de rotation, dans deux positions tourné par rapport au premier axe de rotation.

17. Ensemble crochet de remorquage selon l'une quelconque des revendications 13 à 16, dans lequel le chemin de guidage est disposé à l'intérieur du logement de palier.

18. Ensemble crochet de remorquage selon l'une quelconque des revendications 13 à 17, dans lequel le chemin de guidage s'étend de manière concentrique autour du premier axe de rotation.

19. Ensemble crochet de remorquage selon l'une quelconque des revendications 13 à 18, comprenant un moteur électrique (53) destiné à entraîner le manchon d'entraînement.

20. Ensemble crochet de remorquage selon l'une quelconque des revendications 13 à 18, dans lequel le manchon d'entraînement (140) peut tourner autour du premier axe d'articulation.

21. Ensemble crochet de remorquage selon l'une quelconque des revendications 7 à 20, dans lequel le premier chemin de came présente une première partie d'extrémité orientée de manière sensiblement verticale qui définit la position de la première came dans la position opérationnelle de l'élément de crochet de remorquage.

22. Ensemble crochet de remorquage selon l'une quelconque des revendications 7 à 21, dans lequel le premier chemin de came présente une seconde partie d'extrémité orientée de manière sensiblement verticale qui définit la position de la première came dans la position non opérationnelle de l'élément de crochet de remorquage.

23. Ensemble crochet de remorquage selon l'une quelconque des revendications précédentes, dans lequel la partie d'extrémité proximale présente une extrémité sphérique.

24. Ensemble crochet de remorquage selon l'une quelconque des revendications précédentes, dans lequel la partie d'extrémité proximale est dotée d'une came d'entraînement ou d'une came de commande et d'un premier et d'un second chemin de guidage de celle-ci, dans lequel la came d'entraînement s'étend dans les deux chemins de guidage et les deux chemins de guidage présentent des parcours différents entre eux et sont mobiles l'un par rapport à l'autre pour le déplacement de la came d'entraînement, dans lequel, de préférence, le premier chemin de guidage est positionné de manière fixe et le second chemin de guidage est positionné de manière mobile, dans lequel, de préférence, les premier et second chemins de guidage sont mobiles l'un par rapport à l'autre par rotation autour d'un seul axe de rotation, dans lequel de préférence, la came d'entraînement s'étend de manière radiale ou avec une composante directionnelle radiale par rapport à l'axe de rotation.

25. Ensemble crochet de remorquage selon la revendication 24, dans lequel les premier et second chemins de guidage sont disposés dans un premier corps environnant, tel qu'un corps creux, et dans un second corps environnant, tel qu'un corps creux, respectivement, dans lequel le premier corps entoure le second corps et la partie d'extrémité proximale est reçue dans le second corps.

26. Ensemble crochet de remorquage selon la revendication 25, dans lequel le premier corps est entraîné et le second corps est fixe.

27. Ensemble crochet de remorquage selon la revendication 25, dans lequel le second corps est entraîné et le premier corps est fixe.

28. Ensemble crochet de remorquage selon l'une quelconque des revendications 24 à 27, dans lequel le premier chemin de guidage présente une forme sensiblement en V et le second chemin de guidage présente une forme sensiblement en U.

29. Ensemble crochet de remorquage selon l'une quelconque des revendications 24 à 27, dans lequel le second chemin de guidage présente une forme sensiblement en V et le premier chemin de guidage présente une forme sensiblement en U.

30. Ensemble crochet de remorquage selon l'une quelconque des revendications précédentes, dans lequel la partie d'extrémité proximale est dotée d'une came d'entraînement ou d'une came de commande et au moins d'un chemin de guidage entraîné pour entraîner la came d'entraînement.

31. Ensemble crochet de remorquage selon la revendication 30, dans lequel les axes de rotation forment une intersection dans la partie d'extrémité proximale, laquelle intersection forme un point de rotation multiple, et dans lequel la came d'entraînement se situe au niveau d'un côté de l'intersection qui fait face en allant en s'éloignant du col de crochet de remorquage.

32. Ensemble crochet de remorquage selon l'une quelconque des revendications précédentes, dans lequel un premier axe de rotation fait un petit angle par rapport à la verticale, considéré dans un plan de projection vertical transversal à la direction de conduite du véhicule, dans lequel l'élément de crochet de remorquage peut tourner autour d'un point de rotation combiné, dans lequel le col de crochet de remorquage dans une zone incluant la boule d'attelage et se connectant à celle-ci, se situe dans un plan longitudinal central vertical du véhicule, dans lequel le point de rotation se situe également dans ledit plan longitudinal central.

33. Ensemble crochet de remorquage selon l'une quelconque des revendications précédentes, dans lequel l'élément de maintien et la partie d'extrémité proximale forment entre eux une connexion tournante pour une rotation de l'élément de crochet d'attelage autour d'un point de rotation autour de plus d'un axe de rotation, dans lequel un premier axe de rotation fait un petit angle par rapport à la verticale, considéré dans un plan de projection vertical transversal à la direction de conduite du véhicule, dans lequel le col de crochet de remorquage dans une zone incluant la boule d'attelage et se connectant à celle-ci, se situe dans un plan longitudinal central vertical du véhicule, dans lequel le point de rotation se situe également dans ledit plan longitudinal central.

34. Ensemble crochet d'attelage selon la revendication 32 ou la revendication 33, dans lequel la partie d'extrémité proximale, considérée en projection sur un plan transversal vertical du véhicule, avec son axe coïncide avec la projection du premier axe de rotation.
